# EUROPEAN PATENT APPLICATION

(11) **EP 3 024 185 A1**
(43) Date of publication of application: **25.05.2016**
(21) Application number: 15191416.5
(22) Date of filing: 26.10.2015
(51) Int. Cl.: H04L 12/755, H04L 12/751, H04L 29/12

(54) **ROUTE INFORMATION PROVISION PROGRAM, ROUTE INFORMATION PROVISION METHOD AND INFORMATION PROCESSING SYSTEM**

(30) Priority: 18.11.2014 JP 2014233578
(71) Applicant: FUJITSU LIMITED, Kawasaki-shi, Kanagawa 211-8588 (JP)
(72) Inventor: Shimokuni, Osamu, Kanagawa, 211-8588 (JP); Imai, Yuji, Kanagawa, 211-8588 (JP)
(74) Representative: Hoffmann Eitle

(57) **Abstract**

A non-transitory computer readable storage medium storing therein a program for causing a computer to execute a process, the process includes, receiving an inquiry of route information of a communication packet from a first virtual machine to a second virtual machine from a first virtual router relaying the communication packet from the first virtual machine, generating the route information including network identification information of a physical machine equipped with the second virtual machine based on identification information of the second virtual machine and constitution information including network identification information of the physical machine equipped with the second virtual machine, and transmitting the route information to the first virtual router.

## Description

### FIELD

The embodiments discussed herein are related to a route information provision program, a route information provision method and an information processing system.

### BACKGROUND

IaaS (Infrastructure as a Service: IaaS) is service which provides hardware resources necessary for the operation of the computing system to a user. The IaaS builds system which includes a virtual machine and a virtual network which a user required on the hardware base and provides it to the user.

The virtual machine communicates with other virtual machines through the virtual router and the virtual network. There is a method to distribute the virtual router to physical machines mounted with the virtual machines (called as distributed router method). The virtual router performs routing processing depending on a packet transmitted by the virtual machine, and sends it to the physics machine mounted with the virtual machine of communication destination.

On the other hand, an administrator of the IaaS moves (also called as migration) the virtual machine working on the certain physical machine to other physics machine, for the redistribution of hardware resources in the data center or the maintenance of the physical machine. For example, following patent documents 1 or 2 discloses the migration of the virtual machine.

With the migration of the virtual machine, the virtual machine changes the virtual router working with the physical machine after the migration to the default route. In addition, the administration device of the IaaS notifies all virtual routers of the change of the routing table when the administration device of the IaaS detects the migration of the virtual machine. Other virtual machines become able to in this way communicate with the virtual machine which is migrated.

In order to change set of default route, for example, there is a method to operate an agent in the virtual machine. The agent changes the default route with the migration of the virtual machine.

### CITATION LIST

### PATENT LITERATURE

[Patent literature 1] Japanese Laid-Open Patent Publication No. 2012-231382.
[Patent literature 2] Japanese Laid-Open Patent Publication No. 2011-210032.

### SUMMARY

However, in the IaaS, the administrator of the IaaS provides the hardware resources to the user, and the user builds the virtual machine to the hardware resources. Therefore, it is unfavorable to change the default route on the administration side because the user builds the virtual machine originally. In addition, in order to perform the migration of the virtual machine by the reasons of the administrator, it is desirable to avoid the operation of the program such as the agents in the virtual machine.

One feature of the embodiment provides a route information provision program, a route information provision method and the information processing system which controls the routing of the virtual router depending on the migration of the virtual machine.

According to a first aspect of the embodiment, a non-transitory computer readable storage medium storing therein a program for causing a computer to execute a process, the process includes receiving an inquiry of route information of a communication packet from a first virtual machine to a second virtual machine from a first virtual router relaying the communication packet from the first virtual machine, generating the route information including network identification information of a physical machine equipped with the second virtual machine based on identification information of the second virtual machine and constitution information including network identification information of the physical machine equipped with the second virtual machine, and transmitting the route information to the first virtual router.

### BRIEF DESCRIPTION OF DRAWINGS

FIG. 1 is a diagram indicating an example of the block diagram of the information processing system according to the embodiment.
FIG. 2 is a diagram explaining a summary of the IaaS control program which works on the management server device 20 which is explained in FIG. 1.
FIG. 3 is a partial detailed diagram of the IaaS system which is represented by FIG. 1.
FIG. 4 is a diagram explaining communication processing at the time of the migration outbreak in the distributed router method.
FIG. 5 is a diagram explaining a matching of the round-trip route in the distributed router method.
FIG. 6 is a diagram explaining operation when the virtual machine which moved by the migration transmits a packet to a different virtual machine.
FIG. 7 is a diagram explaining operation when another virtual machine transmits a packet that the migrated virtual machine is the destination.
FIG. 8 illustrates an example of the format of the tunnel packet to hold the data of the user which was explained in FIG. 6.
FIG. 9 illustrates an example of the format of the physical machine update packet which was explained in FIG. 7.
FIG. 10 is a diagram explaining a first flow of the processing when the virtual machine vm which moved by the migration receives a packet from facing virtual machine vm which is represented in FIG. 7.
FIG. 11 is a diagram explaining a second flow of the processing when the virtual machine vm which moved by the migration receives a packet from facing virtual machine vm which is represented in FIG. 7.
FIG. 12 is a diagram explaining a case that the virtual machine vm which moved sends a packet to the facing virtual machine vm which is represented in FIG. 6.
FIG. 13 is a diagram explaining a case that the virtual machine vm which moved after progress at scheduled time after the migration receives a packet from facing virtual machine vm.
FIG. 14 is a diagram indicating the software block diagram of management server device 20 which is showed in FIG. 1 and FIG. 3.
FIG. 15 is a diagram explaining a constitution example of virtual system VS1 according to the embodiment.
FIG. 16 is a diagram indicating an example of the virtual network DB 141 depicted by FIG. 14.
FIG. 17 is a first diagram indicating an example of virtual machine DB 142 depicted by FIG. 14.
FIG. 18 is a second diagram indicating an example of virtual machine DB 142 depicted by FIG. 14.
FIG. 19 is a diagram indicating an example of the virtual router DB 143 depicted by FIG. 14.
FIG. 20 is a diagram indicating an example of physical machine DB 144 depicted by FIG. 14.
FIG. 21 is a diagram explaining hardware constitution of server device 10 depicted by FIG. 1, FIG. 3.
FIG. 22 is a diagram indicating the software block diagram of the virtual router program vrp in the server device 10 depicted by FIG. 21.
FIG. 23 is a diagram indicating the input information of the simulation processing by the network management module 312 in the IaaS control program 310 depicted by FIG. 14.
FIG. 24 is a diagram indicating the output information of the simulation processing by the network management module 312 depicted by FIG. 14.
FIG. 25 is a diagram explaining a summary of the simulation processing by the network management module 312 depicted by FIG. 14.
FIG. 26 is a diagram of flow chart explaining simulation processing by the network management module 312 depicted by FIG. 14.
FIG. 27 is a diagram of flow chart explaining processing of the process S11 in the network management module 312 depicted by FIG. 26.
FIG. 28 is a diagram indicating the packet header renewal list hw-1 after the initialization by the process S11-1.
FIG. 29 is a diagram of flow chart explaining processing of the process S14 in the network management module 312 depicted by FIG. 28.
FIG. 30 is a diagram of flow chart explaining NAT conversion processing of the process S14-9 in the network management module 312 depicted by FIG. 29.
FIG. 31 is a diagram explaining an update example of the packet header renewal list hw of the process S14-18 in the flow chart of FIG. 30.
FIG. 32 indicates an example of the NAT Active list of the round-trip session which is registered in the process S14-19 of the flow chart of FIG. 30.
FIG. 33 is a diagram explaining update processing of the packet header renewal list hw in the process S14-10 of the flow chart in FIG. 29.
FIG. 34 is a diagram of flow chart explaining processing of process S17 in the network management module 312 depicted by FIG. 26.
FIG. 35 is a diagram explaining update processing of the packet header renewal list hw-4 in the process S17-1 of the flow chart in FIG. 34.
FIG. 36 is a diagram explaining a format of session information st in which the TX session table st-t and the RX session table st-r have.
FIG. 37 is a diagram explaining the renewal processing of header information hd of the user packet in the TX processing module 402 and the RX processing module 401 depicted by FIG. 22.
FIG. 38 is a diagram of flow chart explaining the processing of TX processing module 402 in the virtual router vr depicted by FIG. 22.
FIG. 39 is a diagram of flow chart explaining processing of the process S27 in FIG. 38. The process S27 indicates the transmission processing of packet of the IP uni-cast.
FIG. 40 is a diagram of flow chart explaining the processing of process S33 in FIG. 39.
FIG. 41 is a diagram of flow chart explaining the processing of RX processing module 401 in the virtual router vr depicted by FIG. 22.
FIG. 42 is a diagram of flow chart explaining processing of the process S52 in FIG. 41.
FIG. 43 is a diagram explaining an example of virtual machine list vh which is equipped in the past.
FIG. 44 is a diagram of flow chart explaining the processing of process S65 in FIG. 42.
FIG. 45 is a diagram of flow chart explaining the processing of process S55 in the flow chart of FIG. 41.
FIG. 46 is a diagram of flow chart explaining processing of the process S83 of FIG. 45.

### DESCRIPTION OF EMBODIMENTS

### [Information processing system]

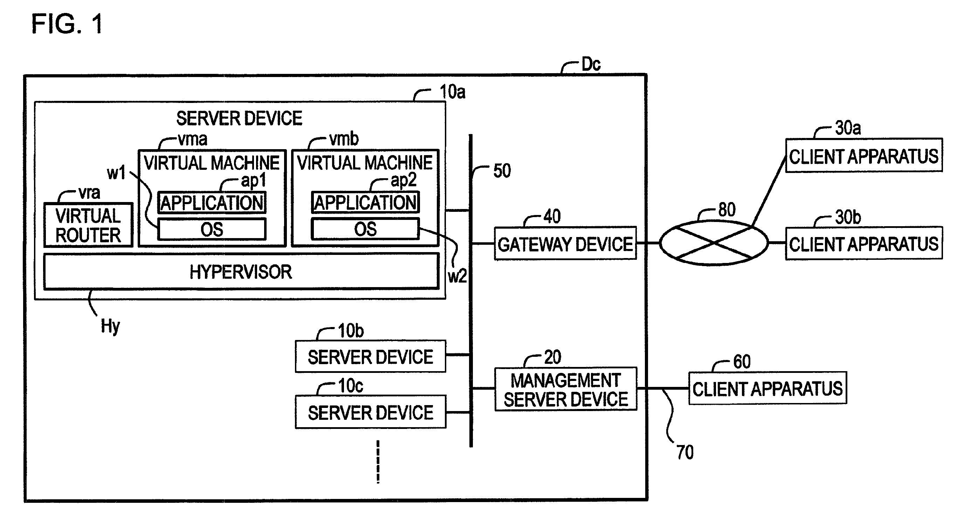

FIG. 1 is a diagram indicating an example of the block diagram of the information processing system according to the embodiment. The information processing system illustrated in FIG. 1 includes a data center Dc and a client apparatus 60 of the administrator and a plurality of client apparatus 30a, 30b of the user. The data center Dc includes a plurality of physical machines (called as a server device as follows) 10a - 10c and a management server device 20 and a gateway device 40. The plurality of server devices 10a - 10c, the management server device 20 and the gateway device 40 are connected by a network 50 of cable broadcasting or wireless. For example, the network 50 includes LAN (Local Area Network), WAN (Wide Area Network).

The information processing system illustrated in FIG. 1 is the IaaS (Infrastructure as a Service: IaaS) system providing infrastructure itself necessary for the operation of the computing system to a user. The information processing system (called as IaaS system as follows) designates the service which provides the virtual system consisting of the virtual machine and the virtual network to the user (also called as tenant as follows).

The IaaS system comprises the server devices 10a - 10c (also called as server device 10) which build the virtual system of the user and the management server device 20 which manages the IaaS system. The management server device 20 has a function to manage the computer resources such as the server device 10a - 10c, the physics network 50, the physical storage device (do not illustrate in FIG. 1). For example, each of plurality of server devices 10a - 10c includes dozens of data processors, and is located in a rack. In addition, the number of the server devices 10a - 10c is not limited to an example of FIG. 1.

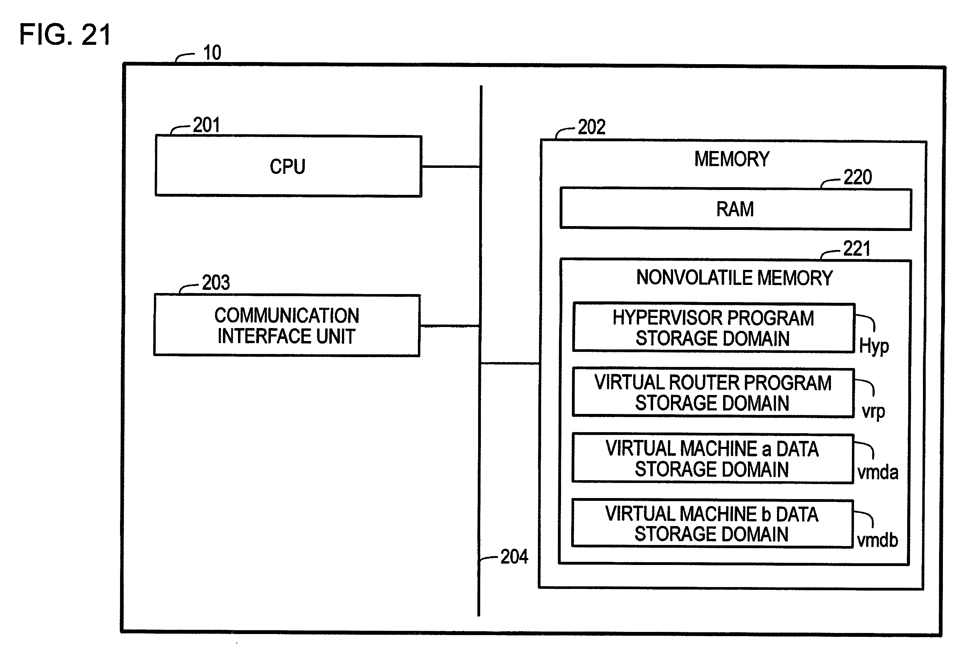

The server devices 10a - 10c are computer resources in the IaaS system and are computers which virtualizes the hardware resources of the own device and executes the plurality of different OS's (Operating System: OS). The hardware constitution of the server device 10a - 10c will be described later according to FIG. 21.

The server devices 10a - 10c deploy the virtual machine "vma", "vmb". The virtual machines "vma", "vmb" are virtual computers working in the practice environment which is built by dividing the hardware resources of the physical computer. In the server devices 10a - 10c, hypervisor "Hy" works, and one or more virtual machine "vma", "vmb" work on the hypervisor "Hy". The substance of the virtual machine "vma", "vmb" (also called as virtual machine "vm") include, for example, software such as program or OS and information to designate the hardware resources to carry out the software. The virtual machines "vma", "vmb" operate OS "w1", "w2". In addition, in each OS "w1", "w2", for example, application programs "ap1", "ap2", which carry out the service that the user offers, work.

In addition, on the hypervisor "Hy", soft SW (SWitch)/ distributed router (below, also called as a virtual router) "vra" work. The virtual router "vra" is a component forming a virtual system, and has IP (Internet Protocol: IP) routing function of the packet which is transmitted and received between the virtual machines in the virtual system. The virtual router "vra" (also called as virtual router vr) connects with the virtual machine "vma" and the virtual machine "vmb" through the virtual NIC (Network Interface Controller: NIC) on the hypervisor "Hy".

On the IaaS system, the user builds the virtual machine based on the offered hardware resources. Therefore, the virtual machines "vma", "vmb" correspond to the exclusive (responsibility) range of the user. In other words, the permission of the user is necessary when the administrator changes the setting of the virtual machine "vma", "vmb" or operates any program in the virtual machine "vma", "vmb". On the other hand, the virtual router "vra" corresponds to the responsibility range on the administrator side.

The management server device 20, for example, assigns the server device 10 and the physical network, etc. to a virtual system depending on the deployment demand of the virtual system. In addition, the management server device 20, for example, controls the migration, start and stop, etc. of the virtual machine "vma", "vmb" on the server devices 10a - 10c, depending on the deploy change, the start, and the stop demands of the virtual machine "vm". In addition, the management server device 20 controls the start, the stop of the virtual router "vra" on the server devices 10a - 10c.

The client apparatus 60 is the computer of which the administrator of the IaaS system uses. The client apparatus 60 is a personal computer, for example. The administrator accesses the management server device 20 through the client apparatus 60. The client apparatus 60 connects to the management server device 20 through a network 70 of wire or wireless, for example.

In addition, the gateway device 40 carries out interconnection with the data center Dc and the client apparatus 30a, 30b. The client apparatus 30a, 30b are the computers of which the user of the IaaS system uses. The client apparatus 30a, 30b are a personal computer, or a handheld terminal device, for example. The client apparatus 30a, 30b connect with the gateway device 40, that is, the virtual system, through the Internet 80.

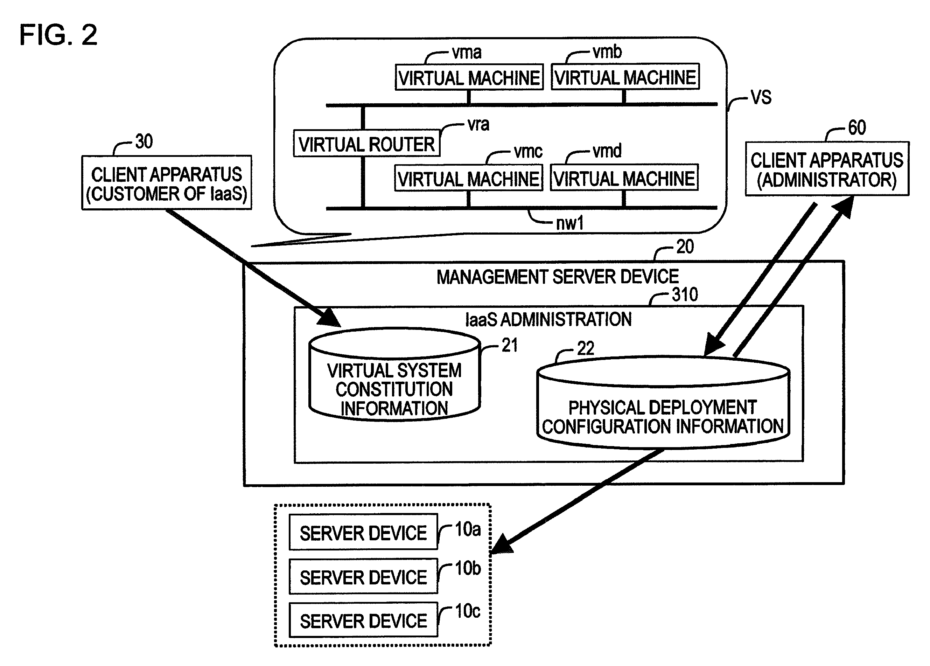

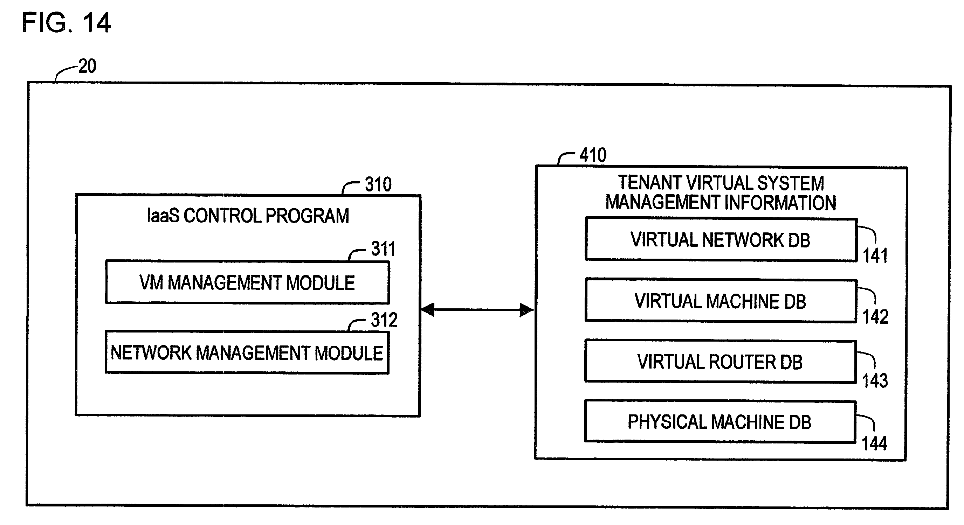

FIG. 2 is a diagram explaining a summary of the IaaS control program which works on the management server device 20 which is explained in FIG. 1. The IaaS control program 310 is program which carries out administration processing of the IaaS system which is explained in FIG. 1. In FIG. 2, same elements which are represented by FIG. 1 are indicated in the same sign in FIG. 1. In addition, the software block diagram of the IaaS control program 310 according to the embodiment will be described later in FIG. 14.

The virtual system VS represented by FIG. 2 is an example of the virtual system VS formed based on the deployment demand by the user. The virtual system VS of FIG. 2 includes the virtual machines "vma" - "vmd" and the virtual router "vra". The virtual machines "vma" - "vmd" and the virtual router "vra" are connected mutually by virtual network "nw1" for exclusive use of the tenant. The virtual system VS is constructed according to the plurality of server devices 10 represented by FIG. 1, for example.

The user (also called as tenant or customer of IaaS system) requires deployment, a change, withdrawal of the virtual system VS to the IaaS control program 310 through the client apparatus 30a, 30b which is represented by FIG. 1. In addition, the administrator accesses the IaaS control program 310 and orders display of the deployment state of the virtual machine "vm".

In addition, the administrator orders live migration (below called as migration) of the virtual machine to the IaaS control program 310 through the client apparatus 60. The migration means a function to move the virtual machine "vm" working on a certain server device 10 to another server device 10 and continue the processing of the virtual machine "vm" without stopping the virtual machine "vm". On the IaaS system which is represented by FIG. 1, the administrator orders the migration for redistribution or the maintenance of hardware resources.

The IaaS control program 310 generates virtual system constitution information 21 based on the deployment demand by the user. The virtual system constitution information 21 has identification information of virtual machine "vm" forming the virtual system VS and the number of the virtual machines "vm", and constitution of the virtual network "nw1", etc.. In addition, the IaaS control program 310 creates physical deployment configuration information 22 based on the virtual system constitution information 21. The physical deployment configuration information 22 has correspondence information between the virtual machine "vm" and the server device 10 equipped with the virtual machine "vm".

The IaaS control program 310 performs deployment, migration and removal of the virtual machine "vm" and the virtual network "nw1" based on the physical deployment configuration information 22. In addition, the IaaS control program 310 outputs a deployment state of the virtual system VS to the client apparatus 60 (referring to FIG. 1) based on the physical deployment configuration information 22 in response to instruction of the display.

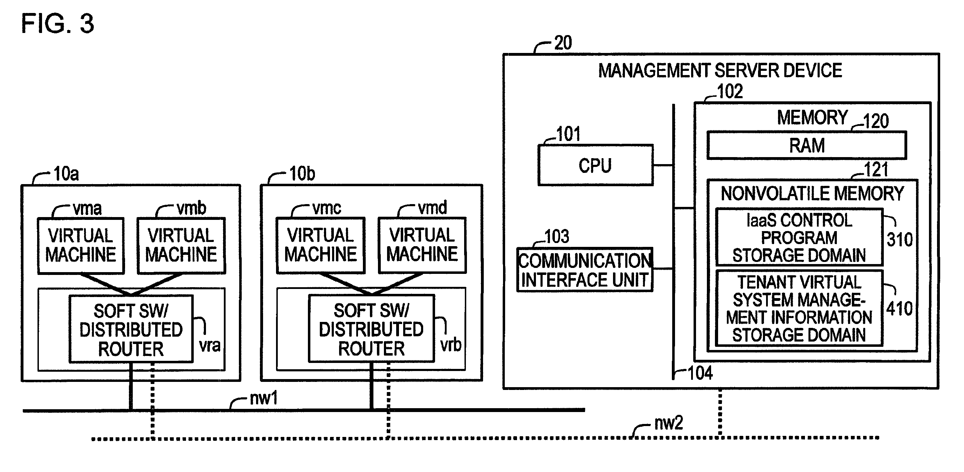

FIG. 3 is a partial detailed diagram of the IaaS system which is represented by FIG. 1. In FIG. 3, same elements as that in FIG. 1 are indicated by same signs in FIG. 1. FIG. 3 illustrates an example of virtualization constitution of the server devices 10a, 10b.

In the server device 10a depicted by FIG. 3, the virtual router (soft SW/ distribution router) "vra" and two virtual machine "vma", "vmb" work. The virtual router "vra" communicates with the virtual machine "vma", "vmb" through the network such as TCP (Transmission Control Protocol) / IP (Internet Protocol). The virtual machine "vma", "vmb" communicate with the virtual machine "vmc", "vmd" of which other server device 10b equips through the virtual router "vra" by setting a default route in the virtual router "vra". The server device 10b is similar to the server device 10a.

In addition, the virtual routers "vra", "vrb" are connected each other through tenant network (the virtual network in FIG. 2) "nw1" illustrated by a solid line. In addition, the virtual router "vra", "vrb" connect with the management server device 20 through the management network "nw2" which is a virtual network illustrated in a dotted line. In addition, the virtual router "vra" may increase or decrease by the software and may operate with an exclusive server device (not illustrated in FIG. 2) and may operate on a general-purpose server device (not illustrated in FIG. 2) as a kind of the virtual machine.

In addition, FIG. 3 illustrates a diagram of hardware constitution of the management server device 20. The management server device 20 illustrated in FIG. 3 has, for example, a CPU (Central Processing Unit: CPU) 101, a memory 102 such as a RAM (Random Access Memory: RAM) 120 and a nonvolatile memory 121, a communication interface unit 103. The all parts are connected through bus 104 mutually. The communication interface unit 103 connects with the server devices 10a - 10b and the client apparatus 60 (referring to FIG. 1) through the management network "nw2".

The CPU 101 is connected to the memory 102, etc. through the bus 104 and controls the whole of the management server device 20. The RAM 120 of the memory 102 memorizes the data of which the CPU 101 processes.

The nonvolatile memory 121 of the memory 102 has storage domain (not illustrated in FIG. 2) which stores the program of the OS that the CPU 101 carries out and storage domain 310 to store the IaaS control program which work on the OS. In addition, the nonvolatile memory 121 includes storage domain 410 which stores tenant virtual system management information. The nonvolatile memory 121 includes an HDD (Hard disk drive: HDD), a nonvolatile semiconductor storage device.

The IaaS control program (following called as IaaS control program 310) in the IaaS control program storage domain 310 realizes the management process of the IaaS systems in the embodiment by processing of the CPU 101. The details of the processing will be described later according to FIG. 14.

The tenant virtual system management information (following called as tenant virtual system management information 410) in the tenant virtual system management information storage domain 410 is the information that the IaaS control program 310 uses. The tenant virtual system management information 410 indicates physical deployment configuration information 22 which is represented by FIG. 2. The details of the tenant virtual system management information 410 will be described later according to FIG. 14.

### [Distributed router method]

As illustrated in FIG. 3, the embodiment adopts the distributed router method. According to the distributed router method, the virtual routers "vra", "vrb" are arranged to distribute in the server devices 10a, 10b installed the virtual machines "vma" - "vmd" each. In other words, in the embodiment, the virtual routers "vra", "vrb" do not locate to one place of virtual machine (not illustrated in FIG. 3) in the virtual system, but locate to distribute to each of the server devices 10a, 10b equipped with the virtual machine "vma" - "vmd". When the distributed router method is adopted, it is possible to suppress quantity of traffic of the communication.

A case that the virtual router "vr" locates in one place of the virtual machine "vm" in the virtual system will be described. When the virtual router "vr" is located in one place of the virtual machine "vm", all packets between the virtual machines pass the virtual router "vr" which is one place. Therefore, each packet in the virtual system arrives at the server device 10 equipped with the virtual router "vr" and then arrives at the server device 10 which equips with the virtual machine "vm" of the destination by folding. Useless traffic in this way occurs.

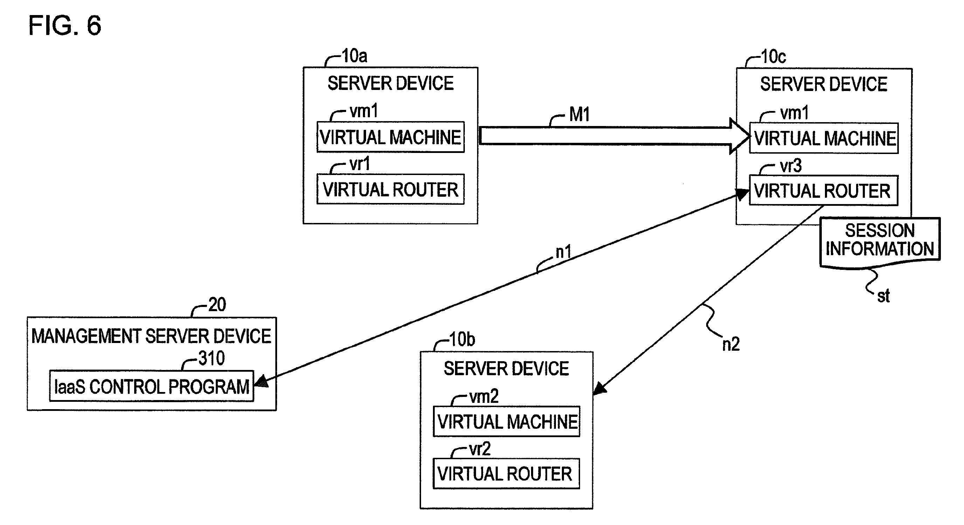

On the other hand, when the distributed router method is adopted, the virtual router "vra" (referring to FIG. 3), which works in the server device 10a which equips the virtual machine "vma", carries out the routing processing of the packet that the transmission origin is the virtual machine "vma". And the virtual router "vra" generates a tunnel packet based on a result of the routing processing and sends the packet to the server device 10b equipped with the virtual machine (for example, vm2) of the destination directly. The tunnel packet will be described later according to FIG. 6.

According to the distributed router method, the packet arrives at the virtual router "vrb" of the server device 10b via the tenant network "nw1" through the virtual router "vra" from the virtual machines "vra", "vrb" of the server device 10a. In other words, according to the distributed router method, it is possible to transmit a packet to the server device 10b directly from the virtual router "vra" and to restrain quantity of traffic of the communication.

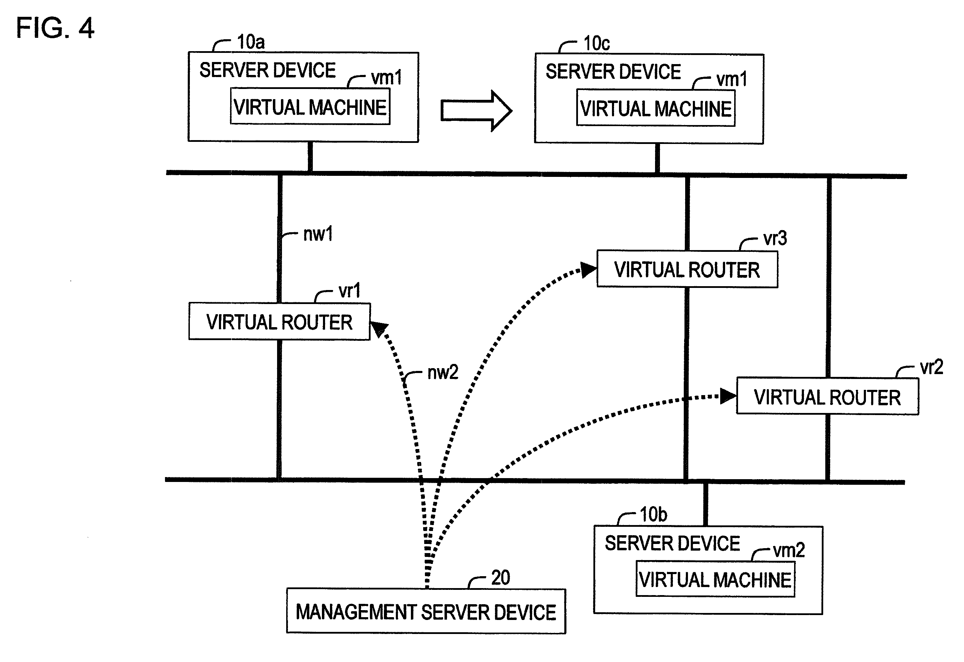

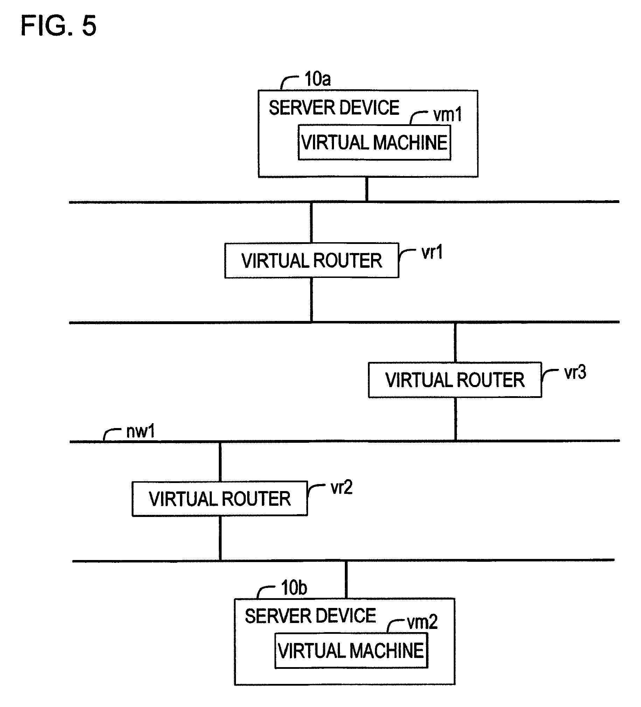

But, according to the distributed router method, an interruption time for communication may occur at the time of outbreak of migration although the communication traffic is suppressed. Later, the communication processing at the time of the migration outbreak will be described according to FIG. 4. In addition, according to the distributed router method, the course of the return journey may be different from an outward trip of the round-trip packet. In addition, the outward trip and the course of the return journey of the round-trip packet in the distributed router method will be described later according to FIG. 5.

### [Migration]

FIG. 4 is a diagram explaining communication processing at the time of the migration outbreak in the distributed router method. In FIG. 4, same elements as that represented by FIG. 3 are represented by same sign as FIG. 3. In addition, in FIG. 4, the server device 10 is represented separately with the virtual router "vr", but the virtual router "vr1" works in the server device 10a, and the virtual router "vr2" works in the server device 10b. In addition, the virtual router "vr3" works in the server device 10c.

In the example of FIG. 4, before migration, the virtual machine "vm1" works in the server device 10a, and the default route of the virtual machine "vm1" points at the virtual router "vr1". Therefore, the virtual machine "vm1" communicates with other virtual machine "vm2" through the virtual router "vr1". In addition, the virtual machine "vm2" works in the server device 10b, and the default route of the virtual machine "vm2" points at the virtual router "vr2".

In the example of FIG. 4, the virtual machine "vm1" moves to the server device 10c from the server device 10a by migration. When the virtual machine "vm1" moves to the server device 10c from the server device 10a, the virtual machine "vm1" after the movement is not able to communicate with other virtual machine "vm2" unless changing the default route to the virtual router "vr3". In this way, interruption time for communication occurs when the default route is not changed quickly.

In order to restrain the interruption time for communication, a method, which an agent (not illustrated in FIG. 4) is operated in the virtual machine "vm1" - "vm3", and changes default routing by the agent, is considered. In other words, on the virtual machine "vm1", "vm2", the agent in conjunction with the management server device 20 is operated. And the agent of virtual machine "vm1" changes the default route to the virtual router "vr3" when the agent of virtual machine "vm1" detects the migration. Thereby, the virtual machine "vm1" after movement becomes able to communicate with other virtual machine "vm2".

In addition, depending on outbreak of migration, the management server device 20 depicted by FIG. 4 notifies all virtual routers "vr1" - "vr3" of information of the server device 10c after the movement of the virtual machine "vm1" through the network "nw2" for the management.

But, in the IaaS system, as described above, there is a responsibility border point between the administrator of the IaaS system and the user (customer). As described in FIG. 1, in the IaaS system, the virtual machine "vm1", "vm2" are the jurisdiction of the user. On the other hand, the virtual routers "vra", "vrb" are the jurisdiction of the administrator.

Therefore, the administrator is not able to change setting of the virtual machine "vm" without the permission of the user. In addition, when the migration is produced on account of the management side, it is desirable to avoid the operation of the programs such as agents in the virtual machine "vm". Therefore, it is demanded to realize routing control of the virtual router "vr" which followed the migration without setting change of the virtual machine "vma", "vmb".

In addition, according to the example of FIG 4, after migration outbreak, the management server device 20 notifies all virtual router "vr1" - "vr3" of information of the server device 10c after the movement of the virtual machine "vm1". The IaaS system manages, for example, the virtual machine "vm" of tens of thousands of scales. Therefore, the load becomes higher with value "O (n²) (Order: O)", because n times of the notice processing produces for one migration of the virtual machine "vm1" when the number of virtual machines is "n". In other words, according to the number of virtual machine "vm", load of the management server device 20 largely increases.

Therefore, it is demanded to realize routing control of the virtual router "vr" which followed the migration without increasing load of the management server device 20.

In addition, when a DHCP (Dynamic Host Configuration Protocol: DHCP) server (not illustrated in FIG. 4) sets a default route instead of the management server device 20, the virtual machine "vm1", "vm2 refer to the DHCP server for the default route regularly. However the inquiry intervals from the virtual machine "vm1", "vm2" to the DHCP server and the interruption time of the communication after migration are in a relation of the trade-off. Therefore, the load of the DHCP server increases when interruption time becomes shorten.

Therefore, in the embodiment, the virtual router "vr" also moves to the server device 10 of the migration destination in the migration of the virtual machine "vm". Therefore, the virtual machine "vm" does not have to change the default routing after the migration. But the virtual router "vr" after the migration does not have route information in the server device 10 of the migration destination.

Therefore, the IaaS control program 310 in the embodiment generates the route information of the packet depending on an inquiry of the route information from the virtual router "vr" and sends it to the inquiry original virtual router "vr". Especially, the IaaS control program 310 receives an inquiry of the route information of communication from the virtual machine "vm1" to the virtual machine "vm2", from the virtual router "vr" depicted by FIG. 4.

And the IaaS control program 310 generates route information including the network identification information (IP address) of the server device 10 which equips with the virtual machine "vm2" based on identification information of the virtual machine "vm2" and the tenant virtual system management information 410 (constitution information in FIG. 3). An IP address of the server device 10 which equips with the virtual machine "vm" is called as a deployment physical machine IP address. The tenant virtual system management information 410 includes the deployment physical machine IP address of each virtual machine "vm". And the IaaS control program 310 sends generated route information to the virtual router "vr".

Thereby, it is possible that the virtual router "vr" acquires a deployment physical machine IP address (route information) of the virtual machine "vm2" of the destination by inquiring to the IaaS control program 310. It is possible that the virtual router "vr" transmits a packet to the virtual machine "vm2" by updating the deployment physical machine IP address of the virtual machine "vm2" included in the route information in a packet. Therefore, it is possible the virtual router "vr" sends a packet to the virtual machine "vm2" even if the virtual machine "vm1" moves by the migration.

Or, when the virtual machine "vm2" moves by the migration, it is possible that the virtual router "vr" acquires the deployment physical machine IP address (route information) of the virtual machine "vm2" of the destination, by inquiring to the IaaS control program 310. It is possible that the virtual router "vr" transmits a packet to the virtual machine "vm2" by updating a deployment physical machine IP address of the virtual machine "vm2" included in the route information by the packet. Therefore, it is possible the virtual router "vr" sends a packet to the virtual machine "vm2" even if the virtual machine "vm2" moves by the migration.

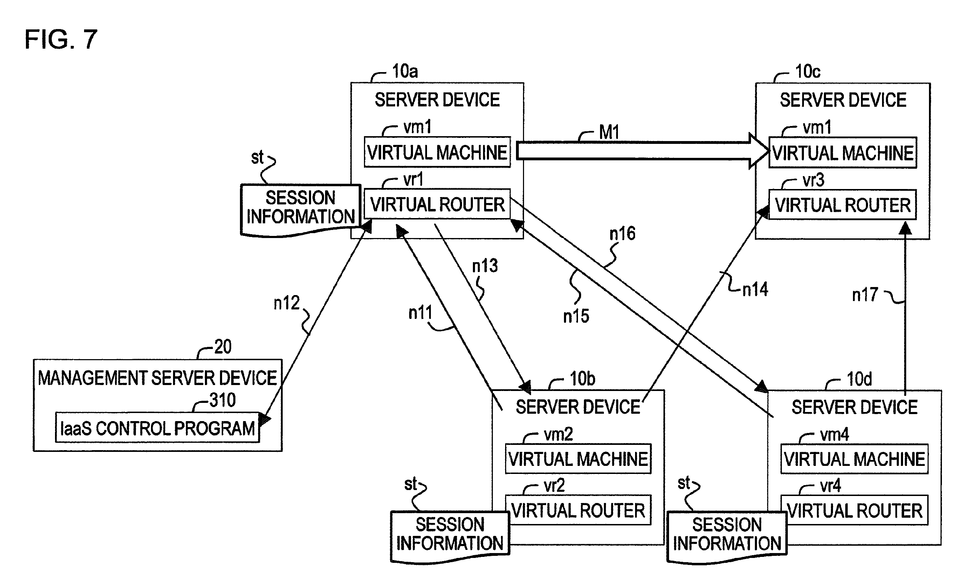

In addition, as described above, in the embodiment, the virtual router "vr" moves in addition to the virtual machine "vm" in the migration. Therefore, the virtual machine "vm1", "vm2" do not have to change the default routing. Thereby, it is possible that the communication that followed migration realizes without changing of the setting of the virtual machine "vm1", "vm2". In other words, it is possible that the routing control that followed migration of the virtual machine "vm" realizes in a responsibility range on the administrator side without causing influence in the virtual system of the user. The details will be described later in FIG. 6, FIG. 7.

### [Matching of the round-trip route]

FIG. 5 is a diagram explaining a matching of the round-trip route in the distributed router method. In FIG. 5, same elements as that in FIG. 3 indicate the same sign in FIG. 3. In addition, in FIG. 5, it is illustrated that the server device 10 is separated from the virtual router "vr", but the virtual router "vr1" works in the server device 10a, and the virtual router "vr2" works in the server device 10b. In addition, the virtual router "vr3" works in the server device 10c (not illustrated in FIG. 5).

According to the distributed router method, the virtual router "vr1" - "vr3" are distributed and located to the server device 10 equipped with the virtual machine "vm". Therefore, there is a case that the virtual router "vr" which performs routing processing are different between an outward trip and a return journey. Because the virtual router "vr" performing routing processing are different between the outward trip and the return journey, the route which is different in the outward trip and the return journey may be selected.

In the example of FIG. 5, the default route of the virtual machine "vm1" points at the virtual router "vr1'; and the default route of the virtual machine "vm2" points at the virtual router "vr2". According to the example of FIG. 5, when the virtual router "vr1" receives a packet in which the virtual machine "vm2" is a destination from the virtual machine "vm1"; the virtual router "vr1" performs the routing processing of the packet. In addition, in the case of a round-trip packet, the virtual router "vr2" performs the routing processing of packet that the virtual machine "vm1" is a destination by the return journey.

In this way, in the case of a round-trip packet, the virtual router "vr1" performs the routing processing of packet of the outward trip, and the virtual router "vr2" performs the routing processing of the packet of the return journey. In other words, the virtual router of the origin of transmission of the packet gathers routing processing. Therefore, the route of the packet of the outward trip and the route of the packet of the return journey may not match with each other.

However, when the virtual router "vr1", "vr2" include a load balancer and an NAT (Network Address Translation: NAT) conversion function, it is necessary to make the communication route of the outward trip and the return journey match. In other words, it is necessary that a route of the packets of the return journeys is a reverse route of the route chosen in the outward trip dynamically.

Therefore, the IaaS control program 310 in the embodiment performs route processing and generates the route information based on header information (first information about the communication) of the packet and the tenant virtual system management information 410 (referring to FIG. 3). The tenant virtual system management information 410 further includes network identification information (IP address, MAC (Media Access Control: MAC) address) of each component constituting virtual system VS and the conversion information of the IP address. In addition, the routing processing includes selection processing of the route of the packet and the conversion processing of IP address. The IaaS control program 310 sends generated route information to the virtual router "vr".

Thereby, it is possible that the virtual router "vr" acquires a route of the reverse conversion of the outward trip by inquiring to the IaaS control program 310 at the time of the transmission of the packet of the return journey. Therefore, it is possible that same virtual router "vr" carries out the routing processing of the outward trip and the return journey substantially and to make a round-trip route agree. Therefore, it is possible to match the routes of the outward trip with the routes of return journey easily, even though adopting the distributed router method.

In addition, the IaaS control program 310 generates the route information which further includes a round-trip flag (round-trip information) which indicates whether a packet is a packet of the outward trip of the round-trip communication. Therefore, it is possible that the virtual router "vr" determines whether a packet is the packet of the outward trip based on the round-trip flag. And when determining that a packet is the packet of the outward trip, the virtual router "vr" generates the route information of the return journey which is a reverse direction of the route of the outward trip and maintains it.

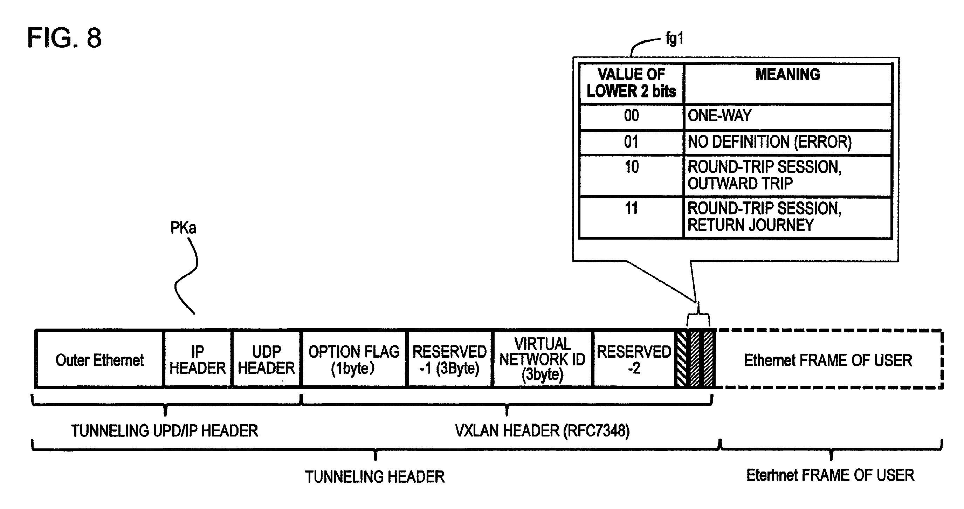

Thereby, it is possible that the virtual router "vr" generates the packet of the return journey at the time of the transmission and reception of the packet of the return journey, based on the route of the return journey that has been generated. Therefore, it is possible that the virtual router "vr" acquires a route which matches with the outward trip more effectively, without inquiring with the route of the return journey, at the time of the transmission and reception of the packet of the return journey. The round-trip flag will be described later according to a format example of the packet in FIG. 8.

Then, a summary of the provision processing of route information by the IaaS control program 310 depicted by FIG 3 in the embodiment will be described.

### [Summary of provision processing of route information]

FIG. 6 is a diagram explaining operation when the virtual machine which moved by the migration transmits a packet to a different virtual machine. In FIG. 6, same elements as that in FIG. 3 are represented by same sign in FIG. 3.

In the example of FIG. 6, a case of which the virtual machine "vm1" and the virtual router "vr1" move to the server device 10c from the server device 10a by the migration M1 is exemplified. In addition, in the example of FIG. 6, the virtual router "vr1" which moved to the server device 10c is described with the virtual router "vr3".

After the migration, the virtual machine "vm1" transmits a packet of which the virtual machine "vm2" is a destination. When the virtual router "vr3" working in the server device 10c receives a packet of which new IP address is an destination (virtual machine "vm2") from the virtual machine "vm1", the virtual router "vr3" inquires to the IaaS control program 310 of the management server device 20 (n1).

The IaaS control program 310 simulates the routing processing of packet based on the tenant virtual system management information 410 (referring to FIG. 3) and the header information (first information about communication) of the packet and generates route information. For example, the header information includes the information of the Ethernet (registered trade mark) header and the IP header of the user packet.

As described above, the route information includes a deployment physical machine IP address of destination virtual machine "vm2" and the round-trip flag which indicates whether the packet is the round-trip and whether the packet is the packet of the return journey of the outward trip. In addition, the route information includes the header information (the second information about the communication) of the user packet which arrives at the virtual machine "vm" of the destination through the virtual router "vr" corresponding to the virtual machine "vm" of the destination from the virtual machine "vm" of the origin of transmission. The header information of the user packet included in the route information is the information that one or more virtual router "vr" on the middle route updates by simulation.

As indicated by FIG. 3, the IaaS control program 310 has the tenant virtual system management information 410 indicating the constitution information of the virtual system VS. As described above, the tenant virtual system management information 410 includes a deployment physical machine IP address of each virtual machine "vm". Therefore, it is possible that the IaaS control program 310 acquires a deployment physical machine IP address of virtual machine "vm2" based on identification information of virtual machine "vm" of the destination of the packet and the tenant virtual system management information 410.

In addition, the tenant virtual system management information 410 further includes a logical network identification information of a component (virtual machine "vm", virtual router "vr") constituting the virtual system VS. The logical network identification information is an IP address, a MAC address, and a NAT conversion information, etc.. The logical network identification information does not change depending on outbreak of migration. Therefore, it is possible that the IaaS control program 310 generates the route information as mentioned above regardless of outbreak of migration based on the tenant virtual system management information 410.

The IaaS control program 310 in FIG. 6 sends the generated route information to the virtual router "vr3" of the origin of inquiry. The virtual router "vr3" maintains the route information which is received as session information "st". And the virtual router "vr3" generates a tunnel packet based on the session information "st" (n2). In the embodiment, the virtual router "vr3" generates a tunnel packet according to L2 over L3(Layer2: L2, Layer3: L3) tunneling method and transfers it.

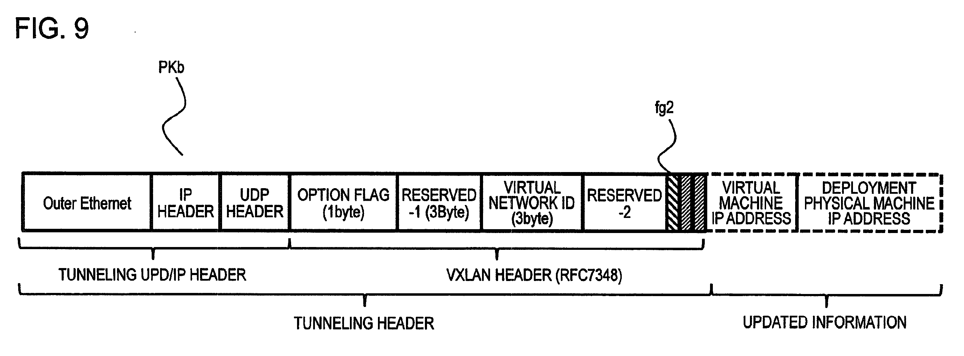

The L2 over L3 tunneling method is a method to convey the L2 (Ethernet) frame of the user packet, according to an IP packet, further. The L2 over L3 tunneling method realizes a virtual network of tenant-specific by providing the ID information (virtual network ID) that is inherent to each virtual network of the user in the packet. More information about the packet of the L2 over L3 tunneling method will be described later according to FIG. 8, FIG. 9.

As an example of the L2 over L3 tunneling method, there are GRE (Generic Routing Encapsulation: GRE) (RFC1701) and VXLAN (Virtual eXtensible Local Area Network: VXLAN) (RFC7348). In addition, as another example of the L2 over L3 tunneling method, there is NVGRE (Network Virtualization using Generic Routing Encapsulation: NVGRE) (draft-sridharan-virtualization-nvgre-05).

Especially, the virtual router "vr3" designates (updates) a deployment physical machine IP address (in FIG 6, an IP address of the server device 10b) of the virtual machine "vm2" of the destination included in the route information, into the address of the tunnel packet. In addition, the virtual router "vr3" designates (updates) the round-trip flag included in the route information into the tunnel packet. In addition, the virtual router "vr3" updates the header information included in the route information into the L2 frame of the user packet of the tunnel packet.

In this way, the virtual router "vr" updates the tunnel packet based on the route information of which the virtual router "vr" inquiries and acquires to the IaaS control program 310 and directly transfers it to the server device 10b equipped with the virtual machine "vm1" of the destination.

As indicated by FIG. 6, it is possible that the virtual router "vr1" which moved by the migration acquires the route information to the virtual machine "vm2" of the destination, by inquiring to the IaaS control program 310. Therefore, it is possible that the virtual router "vr1" sends a packet that other virtual machine "vm2" is the destination, without causing interruption time for communication after migration.

In addition, as described above, the virtual machine "vm1" moves to the server device 10c with the virtual router "vr1". Therefore, the virtual machine "vm1" does not have to change the default route. Therefore, it is possible that the virtual machine "vm1" sends a packet that other virtual machine "vm" is the destination, without causing a change of the setting even if the migration occurs. In other words, it is possible that the IaaS control program 310 performs routing control that followed movement of virtual machine "vm1" in a responsibility range on the administrator side, without changing the virtual machine "vm1", "vm2" which are a responsibility range on the user side.

FIG. 7 is a diagram explaining operation when another virtual machine transmits a packet that the migrated virtual machine is the destination. In FIG. 7, same elements as that in FIG. 3 are represented by same signs in FIG. 3. As same as FIG. 6, a case that the virtual machine "vm1" and the virtual router "vr1" move to the server device 10c from the server device 10a by the migration M1 is exemplified in FIG. 7.

In the example of FIG. 7, the virtual machine "vm2" in which the server device 10b equips transmits a packet that the virtual machine "vm1" is the destination after the migration. The virtual router "vr2" sends a packet to the server device 10a equipped with the virtual machine "vm1" based on the session information "st" which is acquired before the migration, when the virtual router "vr2" working in the server device 10b receives the packet concerned (n11).

When the virtual router "vr1" working in the server device 10a receives a packet that the migrated virtual machine "vm1" is a destination, the virtual router "vr1" inquires to the IaaS control program 310 of the management server device 20 (n12). The IaaS control program 310 generates the route information to the virtual machine "vm1" and transmit to the virtual router "vr1" as same as FIG. 6.

In this way, it is possible that the virtual router "vr1" acquires a deployment physical machine IP address of the virtual machine "vm1" by inquiring to the IaaS control program 310 even if the virtual machine "vm1" of the destination of the packet, moves.

The virtual router "vr1" maintains the route information which is received as the session information "st", generates a physical machine update packet having the deployment physical machine IP address of the virtual machine "vm1", and sends it to the virtual router "vr2" (n13).

The physical machine update packet is a packet to notify other virtual router "vr" of the deployment physical machine IP address of the virtual machine which moved by the migration. In other words, the virtual router "vr1" notifies different virtual router "vr2" which generates a packet that the virtual machine "vm1" is the destination of the route information to the virtual machine "vm1". The details of the physical machine update packet will be described later in FIG. 9.

The virtual router "vr2" maintains the deployment physical machine IP address of the virtual machine "vm1" included in the physical machine update packet which is received, as the session information "st". And the virtual router "vr2" generates a tunnel packet of which the virtual machine "vm1" of the server device 10c is the destination, based on the deployment physical machine IP address of the virtual machine "vm1", and sends it (n14). In this way, it is possible that the virtual router "vr2" sends a packet to the virtual machine "vm1" based on the route information that the virtual router vr1 represents, asks and acquired.

In addition, when the virtual router "vr1" receives a packet that the virtual machine "vm1" is the destination, from different virtual machine "vm4" (n15), the virtual router "vr1" sends the physical machine update packet based on the session information "st" which is held to the virtual router "vr4" (n16). The virtual router "vr4", as same as the virtual router "vr2", maintains the deployment physical machine IP address of the virtual machine "vm1" included in the physical machine update packet as the session information "st", and generates the tunnel packet, and sends it to the server device 10c(n17).

As represented by FIG. 7, one virtual router (in FIG 7, the virtual router "vr1") representatively inquires the route information to the virtual machine "vm1", to the IaaS control program 310. And the virtual router "vr1" which inquired maintains the route information which is acquired as the session information "st". And when the virtual router "vr1" receives a packet of which the virtual machine "vm1" is the destination, the virtual router "vr1" sends the physical machine update packet which is generated based on the session information "st", to the virtual router "vr2", "vr4" of the origin of transmission of the packet.

In this way, the virtual router "vr1" propagates the deployment physical machine IP address of the virtual machine "vm1" to correspondence virtual router "vr2", "vr4" of the virtual machine "vm2", "vm4" which are the origin of transmission of the packet of which the virtual machine "vm1" is the destination. In this way, it is possible that the virtual machine "vm2", "vm4" communicate with the virtual machine "vm1" quickly. Therefore, it is possible that facing virtual machine "vm2", "vm4" send a packet to the migrated virtual machine "vm1" without causing suspended time.

In addition, when the virtual router "vr1" receives the packet of which the migrated virtual machine "vm1" is the destination, the virtual router "vr1" representatively inquires a new deployment physical machine IP address of the migrated virtual machine "vm1". In other words, one virtual router "vr1" is representative and inquires to the IaaS control program 310 for the route information to virtual machine "vm1". Thereby, it is possible to hold down the inquiry number of times of the route information to the virtual machine "vm1" for the IaaS control program 310 to once.

Therefore, the inquiry number of times to the IaaS control program 310 becomes value "O(n) (Order:O)" for number of virtual machines "n". Therefore, it is possible to reduce load of IaaS control program 310 at the time of the migration outbreak even if system is the large-scale IaaS system which manages tens of thousands of virtual machine vm and adopts the distributed router method.

In addition, the traffic increases when updating the session information "st" of all virtual router "vr" which have a possibility to transmit a packet to the virtual machine "vm1". It is not necessarily necessary to update session information "st" of all virtual routers "vr" which have a possibility to transmit a packet to the virtual machine vm1, but it is not easy to detect the virtual router "vr" which really transmits a packet to the virtual machine "vm1" beforehand.

Therefore, the virtual router "vr1" notifies the origin of transmission of the packet of a new deployment physical machine IP address, when the virtual router "vr1" receives a packet of which the virtual machine "vm1" is the destination. Therefore, it is possible that the virtual router "vr1" notifies only virtual router vr which really transmits a packet to the virtual machine "vm1" of a new deployment physics machine IP address. Thereby, according to the embodiment, it is possible to easily update the session information "st" of the virtual router "vr" which to be updated while reducing load.

Then, according to FIG. 8, FIG. 9, a format example of the tunnel packet between the virtual machine which is explained in FIG. 6, FIG. 7 will be described. FIG. 8 illustrates an example of the format of the tunnel packet to hold the data of the user, and FIG. 9 illustrates an example of the format of the physical machine update packet which was explained in FIG. 7.

### [Format of the tunnel packet]

FIG. 8 is a diagram explaining an example of the format of the tunnel packet to hold the data of the user which was illustrated by FIG. 6. As described in FIG. 6, the tunnel packet PKa in the embodiment is a packet based on the L2 over L3 tunneling method.

The format of packet PKa depicted by FIG. 8 is an implementation example of the round-trip flag "fg1" of packet PKa based on standard (RFC7348) of VXLAN which is described above. As represented by FIG. 8, the packet PKa has a tunnel header and Ethernet frame of the user. In addition, the tunnel header includes the UDP (User Datagram Protocol: UDP)/ IP header and VXLAN header of the tunnel.

The virtual router "vr" sets the deployment physical machine IP address of the virtual machine vm of the destination included in the route information, which is acquired by inquiring to the IaaS control program 310, into the UDP/IP header. In addition, the virtual router "vr" sets the update header information included in the route information to the Ethernet frame of the user. Thereby, it is possible that the virtual router "vr" generates a packet to arrive at the virtual machine "vm" of the destination.

In addition, in the embodiment, the round-trip flag "fg1" included in the route information is added to lower 2 bits of the reserved domain of the eighth byte of the VXLAN header. A case that lower 2 bits is value "00" indicates a one-way packet, and the case of value "01" indicates that there is no rule (error). In addition, the case that the lower 2 bits is value "10" indicates a packet of the outward trip of the round-trip session, and the case of value "11" indicates a packet of the return journey of the round-trip session.

Since the tunnel packet PKa has the round-trip flag "fg1", it is possible that the virtual router "vr" determines whether the packet PKa is the packet based on the round-trip session and whether the packet is an outward trip or the return journey. In other words, it is possible that the virtual router vr determines whether the tunnel packet PKa to transmit and receive is a packet to be accompanied by NAT conversion and whether the packet is the packet of client-sides such as the NAT conversion.

And it is possible that the virtual router vr generates the route information of the return journey at the time of transmission and reception of tunnel packet PKa of the outward trip and maintains it. In addition, it is possible that the virtual router vr updates the tunnel packet PKa based on the route information of the return journey which was generated in the outward trip at the time of transmission and reception of tunnel packet PKa of the return journey. Thereby, it is possible to match the routes of the outward trip of the packet and the route of the return journey of the packet.

FIG. 9 is a diagram explaining an example of the format of the physical machine update packet PKb which was explained in FIG. 7. The format of the physical machine update packet PKb depicted by FIG. 9 is, as same as FIG. 8, based on a standard of VXLAN (RFC7348).

In the embodiment, a flag "fg2" indicating the physical machine update packet PKb is added to lower 3 bits in the reserved domain of the eighth byte of the VXLAN header. In addition, the physical machine update packet PKb has the IP address and the deployment physical machine IP address of the virtual machine which moved, in substitution for the L2 frame of the user packet.

### [Flow of the processing of IaaS control program and virtual router]

Then, a flow of the processing of the IaaS control program 310 and the virtual router vr at the time of the migration outbreak depicted by FIG. 6 and FIG. 7 will be described.

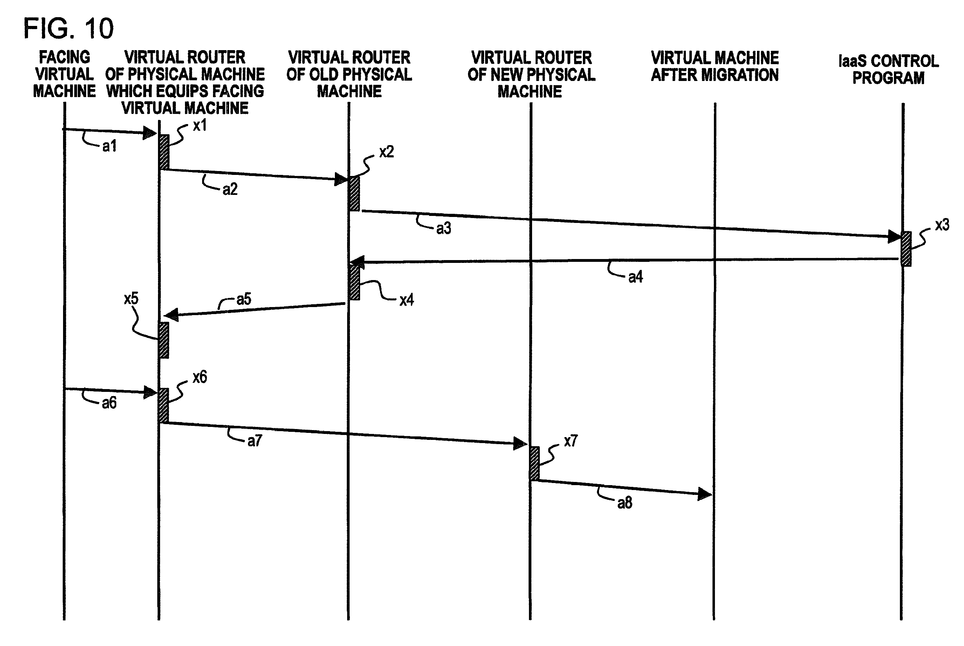

FIG. 10 is a diagram explaining a first flow of the processing when the virtual machine vm which moved by the migration receives a packet from facing virtual machine vm. Accordingly, the virtual machine vm which moved by the migration corresponds to the virtual machine vm1 in FIG. 7, and the facing virtual machine vm corresponds to the virtual machine vm2 in FIG. 7.

x1: the virtual router vr2 (following, called as virtual router of the facing virtual machine) of the server device 10b which equips the facing virtual machine vm2 receives the packet, of which the virtual machine vm1 (following, called as virtual machine of the destination) is the destination, from the facing virtual machine vm2 (a1). Then the virtual router vr2 has the session information st (following, called as old information) before migration of the virtual machine vm1 of the destination.

The virtual router vr2 of the facing virtual machine generates the tunnel packet PKa based on the old information, and transmits it (a2, n11 in FIG. 7). Therefore, the tunnel packet PKa arrives at the virtual router vr1 working in the server device 10a (following, called as old physical machine) which equipped the virtual machine vm1 of the destination before migration.

x2: The virtual router vr1 of old physical machine 10a judges whether the virtual machine vm1 of the destination of tunnel packet PKa works with an own machine. In this case, because the virtual machine vm1 moved by the migration, the virtual machine vm1 does not work with the own machine. Therefore, the virtual router vr1 of the old physical machine cancels the packet and inquires to the network management module 312 of the management server device 20 for the route information to virtual machine vm1 through the management network nw2 (a3, n12 in FIG. 7).

x3: The network management module 312 generates route information to the virtual machine vm1 of the destination by simulation processing and sends it to the virtual router vr1 of the origin of inquiry (a4, n12 in FIG. 7).

x4: The virtual router vr1 memorizes the route information which is received as the session information st. In addition, the virtual router vr1 generates the physical machine update packet PKb depicted by FIG. 9 based on the session information st and sends it to the virtual router vr2 of the facing virtual machine (a5, n13 in FIG. 7).

x5: The virtual router vr2 of the facing virtual machine updates the session information st based on the physical machine update packet PKb which is received. Especially, the virtual router vr2 updates the session information st of which the virtual machine vm1 is the destination according to the deployment physical machine IP address of the virtual machine vm1 included in the physical machine update packet PKb.

x6: When the virtual router vr2 of the facing virtual machine receives a packet of which the virtual machine vm1 is the destination again, the virtual router vr2 generates the tunnel packet PKa based on the session information st which is updated in the process x5 and sends it (a7, n14 in FIG. 7). Thereby, the tunnel packet PKa arrives at the server device 10c (following, called as new physical machine) which equips the virtual machine vm1 after migration.

x7: The virtual router vr3 working in new physics machine 10c analyzes the tunnel packet PKa which is received, and transfers it to the virtual machine vm1 of the destination.

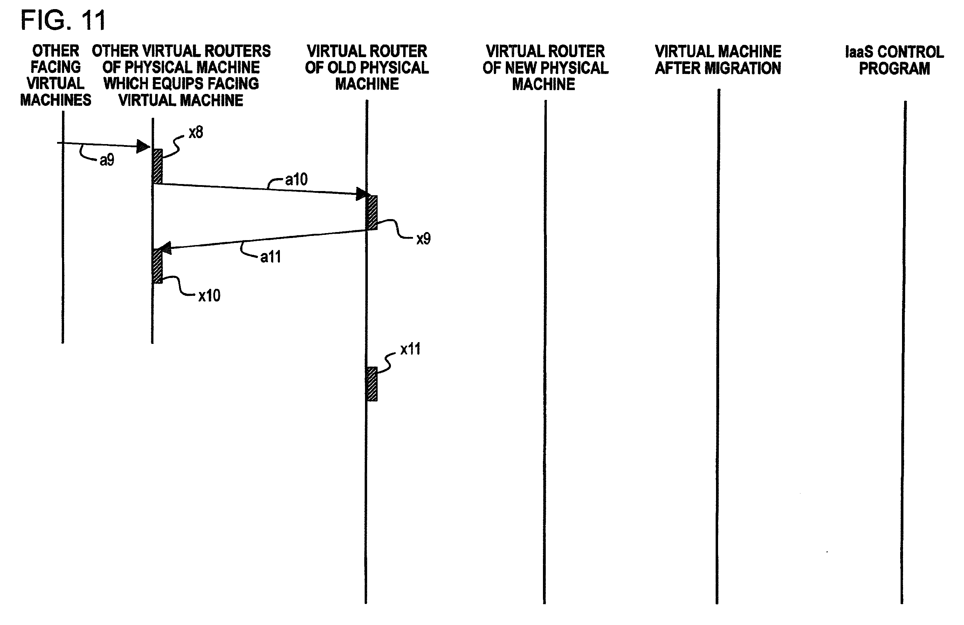

FIG. 11 is a diagram explaining a second flow of the processing when the virtual machine vm which moved by the migration receives a packet from facing virtual machine vm. It is exemplified that after the processing in FIG. 10, the virtual router vr1 receives packets toward the virtual machine vm1 of the destination from other facing virtual machine vm4 which is different from the facing virtual machine vm2.

x8: The virtual router vr4 (following, called as virtual router of other facing virtual machines) of the server device 10d equipping other facing virtual machine vm4 receives the packet of which the virtual machine vm1 is the destination (a9). As same as the process x1 in FIG. 10, the virtual router vr4 of other facing virtual machines generates the tunnel packet PKa based on the session information st (old information) before the migration of the virtual machine vm1 and sends it (a10, n15 in FIG. 7). Thereby, as same as the process x1, the tunnel packet PKa arrives at the virtual router vr1 working in old physical machine 10a.

x9: As same as the process x2 of FIG 10, the virtual router vr1 of old physical machine 10a cancels the packet and transmits the physical machine update packet PKb based on the session information st which is memorized in the process x4 to the virtual router vr4 of other facing virtual machines (a11, n17 in FIG. 7).

x10: The virtual router vr4 of other facing virtual machine, as same as the processes x5 - x7 in FIG. 10, updates the session information st based on the physical machine update packet PKb and generates the tunnel packet PKa to the virtual machine vm1 of the destination and sends it. In this way, it is possible that the virtual machine vm4 transmits a packet to the virtual machine vm1 without causing suspended time.

x11: When a period 2 times as large as a session cache timer level passes after the migration of the virtual machine vm1, the virtual router vr1 of old physics machine 10a is finished. That is, the old physical machine 10a operates the virtual router vr1 after the migration during the period 2 times as large as the session cache timer level of session information st.

In this way, the virtual router vr1 maintains a new deployment physical machine IP address of virtual machine vm1, of which the virtual router vr1 acquired on behalf of the virtual routers after the migration, as the session information st. Therefore, it is possible that the virtual router vr1 notifies other virtual machine vm of the deployment physical machine IP address of the virtual machine vm1 based on the session information st. Thereby, it is possible to hold down the inquiry number of times to the IaaS control program 310 to once.

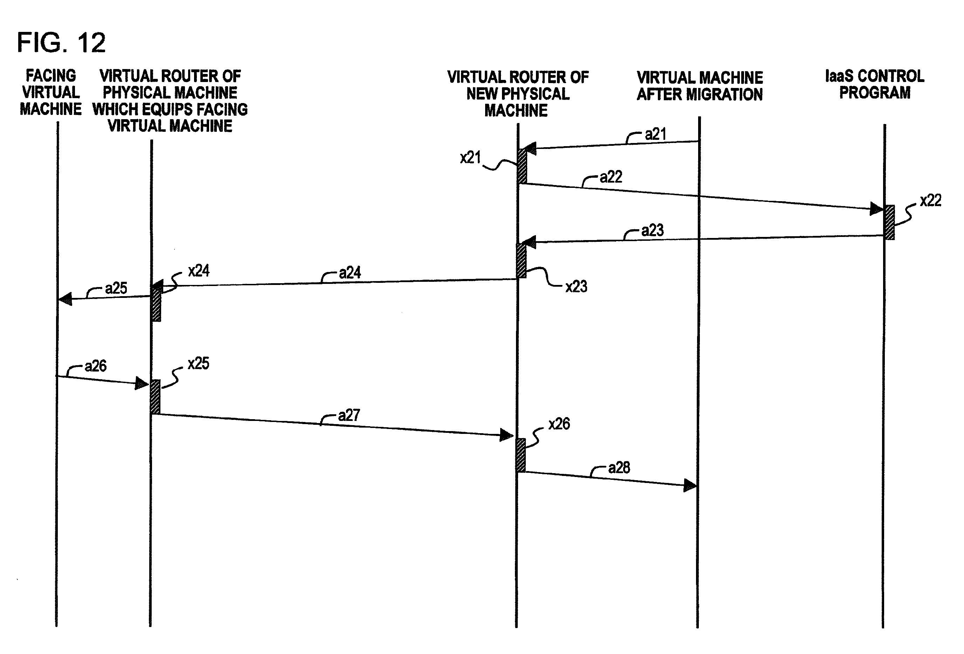

FIG. 12 is a diagram explaining a case that the migrated virtual machine vm which moved sends a packet to the facing virtual machine vm. In other words, virtual machine vm which moved by the migration corresponds to the virtual machine vm1 in FIG. 6, and facing virtual machine vm corresponds to the virtual machine vm2 in FIG. 6.

x21: The virtual router vr3 of the server device 10c (following, called as new physical machine) equipping the virtual machine vm1 after the migration receives the packet of which the facing virtual machine vm2 is the destination from the virtual machine vm1 (a21). Because the virtual router vr3 of new physical machine 10c is after migration, the virtual router vr3 does not have the session information st. Therefore, the virtual router vr3 of new physical machine 10c inquiries to the network management module 312 for route information to the facing virtual machine vm2 (a22, n1 in FIG. 6).

x22: The network management module 312 generates the route information to the virtual machine vm2 of the destination, as same as the process x3 in FIG. 10, and sends it to the virtual router vr3 of the origin of inquiry (a23, n1 in FIG. 6). In addition, the route information includes the round-trip flag "fg1" indicating that a route to the virtual machine vm2 is the packet of the outward trip of the round-trip session.

x23: The virtual router vr3 of new physical machine 10c memorizes the route information which is received as the session information st and generates tunnel packet PKa to the facing virtual machine vm2, and sends it (a24, n2 in FIG. 6). Then the virtual router vr3 detects that the packet is a packet of the outward trip based on the round-trip flag "fg1" and generates the header information of the user packet of the return journey based on the route of the opposite direction to the outward trip and memorizes it in the session information st.

x24: The virtual router vr2 (following, virtual router of facing virtual machine) of the physical machine 10b equipping the facing virtual machine vm2 updates the session information st which is held based on the tunnel packet PKa which is received. Then the virtual router vr2 of facing virtual machine vm2 detects that the packet is a packet of the outward trip based on the round-trip flag "fg1" and memorizes the deployment physical machine IP address of virtual machine vm1 which is the destination of the packet of the return journey, as the session information st. The virtual router vr2 analyzes the tunnel packet PKa which is received, and transfers the packet to the facing virtual machine vm2 (a25).

x25: When the virtual router vr2 of the facing virtual machine vm2 receives the packet of the return journey from the facing virtual machine vm2 (a26), the virtual router vr2 generates the tunnel packet PKa of the return journey. Especially, the virtual router vr2 acquires the IP address of the destination of the return journey based on the session information st which is registered in the process x24. And the virtual router vr2 generates the tunnel packet PKa of which the acquired IP address is the destination and the round-trip flag fg1 indicates the return journey, and sends it(a27).

x26: The virtual router vr3 of new physical machine 10c receives the tunnel packet PKa from the virtual router vr2 of the facing virtual machine vm2. Then the virtual router vr3 detects that the packet is a packet of the return journey based on the round-trip flag "fg1" in the tunnel packet PKa. And the virtual router vr3 updates the header information of the user packet to the virtual machine vm1 based on the route of the return journey which was registered in the session information st in the process x23 and transfers it to the virtual machine vm1 (a28).

As described in the processes x23 - x26, the tunnel packet PKa in the embodiment has the round-trip flag "fg1". By the flag, it is possible that the virtual router vr2, vr3 distinguish whether the packet which is transmitted and received is a round-trip packet and a packet of an outward trip or the return journey. And when the virtual router vr2, vr3 detect that the packet is a packet of the outward trip based on the round-trip flag "fg1" the virtual router vr2, vr3 memorizes the route information of the packet of the return journey as the session information st.

In this way, it is possible that the virtual router vr2 updates the IP address of the destination in the tunnel packet PKa based on the session information st which is memorized at the time of the transmission of the packet of the return journey (x25). In addition, it is possible that the virtual router vr3 updates the header information of the user packet in the tunnel packet PKa based on the session information st which is memorized at the time of the reception of the packet of the return journey (x26).

In this way, by generating the route of the return journey based on the route of the outward trip, it is possible to make the outward trip of the packet and the route of the return journey agree. Therefore, according to the embodiment, it is possible to make the routes of the outward trip and of the return journey agree about the packet to go by way of the NAT conversion or the load balancer. In addition, because the tunnel packet PKa has the round-trip flag "fg1", it is possible that the virtual router vr2, vr3 acquires the route of the packet of the return journey which agrees with the outward trip, without performing an inquiry to the IaaS control program 310 at the time of the transmission and reception of the packet of the return journey.

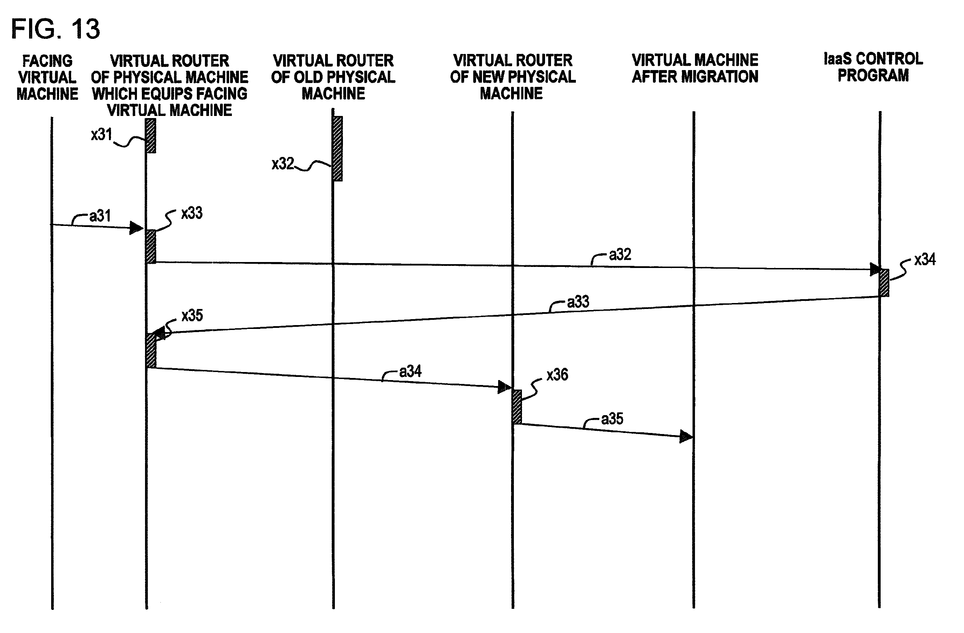

FIG. 13 is a diagram explaining a case that the virtual machine vm which moved after progress at scheduled time after the migration, receives a packet from facing virtual machine vm. The example of FIG 13 supports an example of FIG 7.

x31: In the virtual router vr2 (following, virtual router of the facing virtual machine) of the server device 10b equipping the facing virtual machine vm2, the session information st is erased by the progress of the period of the cache timer level of session information st.

x32: The virtual router vr1 working in the server device 10a (following, called as old physical machine) equipped with the virtual machine vm1 which moved by the migration is finished because passing during a period 2 times as large as the session cache timer level.

x33: The virtual router vr2 of the facing virtual machine receives the packet that the virtual machine vm1 is the destination from the facing virtual machine vm2 (a31). As described in the process x31, the session information st in which the virtual router vr2 holds is erased. Therefore, the virtual router vr2 of the facing virtual machine inquires to the network management module 312 of management server device 20 for the session information st of the virtual machine vm1 through the management network nw2.

x34: The network management module 312 generates the route information to virtual machine vm1 of the destination, as same as the process x3 in FIG. 10, and sends it to the virtual router vr2 of the inquiry origin (a23).

x35: The virtual router vr2 of the facing virtual machine memorizes the route information which is received as the session information st, and generates the tunnel packet PKa to the virtual machine vm1, and transmits it (a34).

x36: The virtual router vr3 of new physics machine 10c analyzes the tunnel packet PKa which is received and transfers it to the virtual machine vm1(a35).

As described in FIG. 13, the virtual router vr in the embodiment holds (memorizes) the session information (route information) st during the period when a timer level indicates. Therefore, the session information st is erased when the period of the timer level passes. In this way, the virtual router vr inquires to IaaS control program 310 for route information to the virtual machine vm of the destination of the packet, when there is not session information st corresponding to the packet for the transmission. In other words, the virtual router vr inquires to the IaaS control program 310 for the route information again because the session information st is erased by the expiration of the timer.

Thereby, it is possible that the virtual router vr updates the session information st. Therefore, it is possible to update the session information st, when the virtual machine vm of the destination of the packet for the transmission moves by the migration. Accordingly, it is possible to avoid that a packet is discarded, by a result of transmitting a packet based on old session information st.

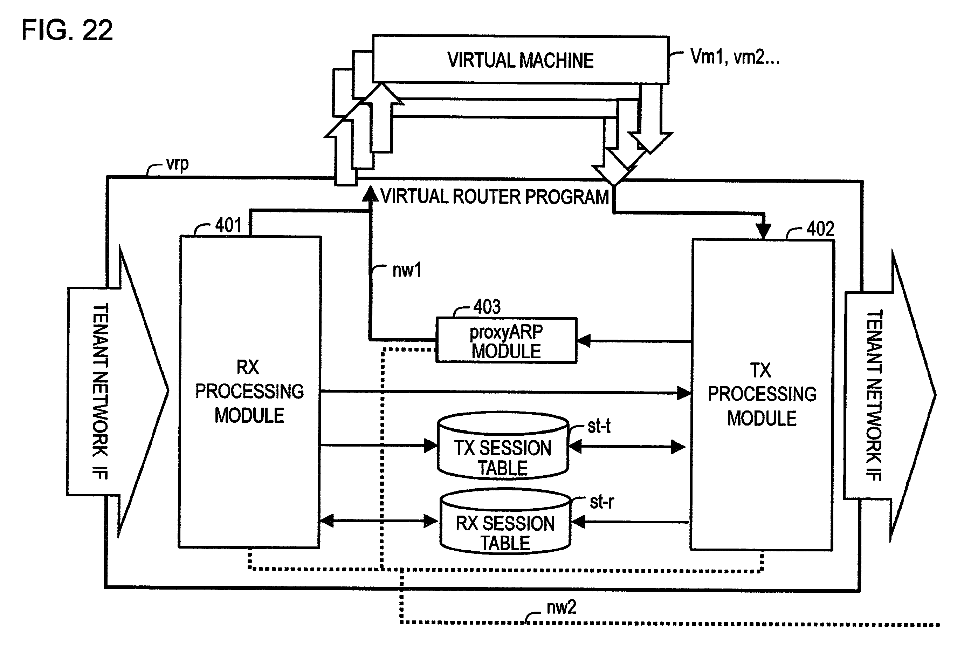

Then, according to FIG. 14 - FIG. 20, software block diagram of the management server device 20 and the IaaS control program 310 depicted by FIG. 1 and FIG. 3 will be described. And, according to FIG. 21, FIG. 22, hardware constitution of the server 10 and software block diagram of the virtual router vr depicted by FIG. 1, FIG. 3 will be described.

### [Management server device]

FIG. 14 is a diagram indicating the software block diagram of management server device 20 which is showed in FIG. 1 and FIG. 3. The IaaS control program 310 in the management server device 20 has VM management module 311 and network management module 312.

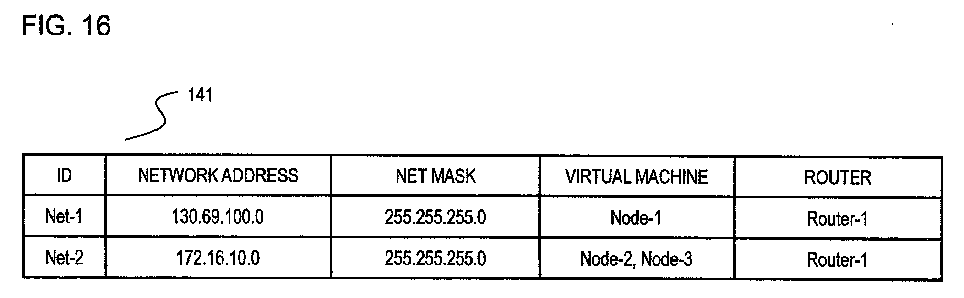

The VM management module 311 depicted by FIG. 14 manages start, placement, and removal of the virtual machine vm depending on the demand of a user and the administrator and updates the tenant virtual system management information 410. In addition, the VM management module 311 moves the virtual machine vm depending on instruction of migration from the administrator and updates the tenant virtual system management information 410. The tenant virtual system management information 410 includes virtual network database 141, virtual machine database 142, virtual router database 143, physical machine database 144. The explanation of each database will be described later according to FIG. 16 - FIG. 20.

In addition, the network management module 312 manages the virtual network ("nw1" in FIG. 3) of the tenant. In addition, the network management module 312 carries out simulation processing and generates the route information, based on the tenant virtual system management information 410, in response to an inquiry from the virtual router vr. And the network management module 312 sends generated route information to the virtual router vr of the origin of inquiry.

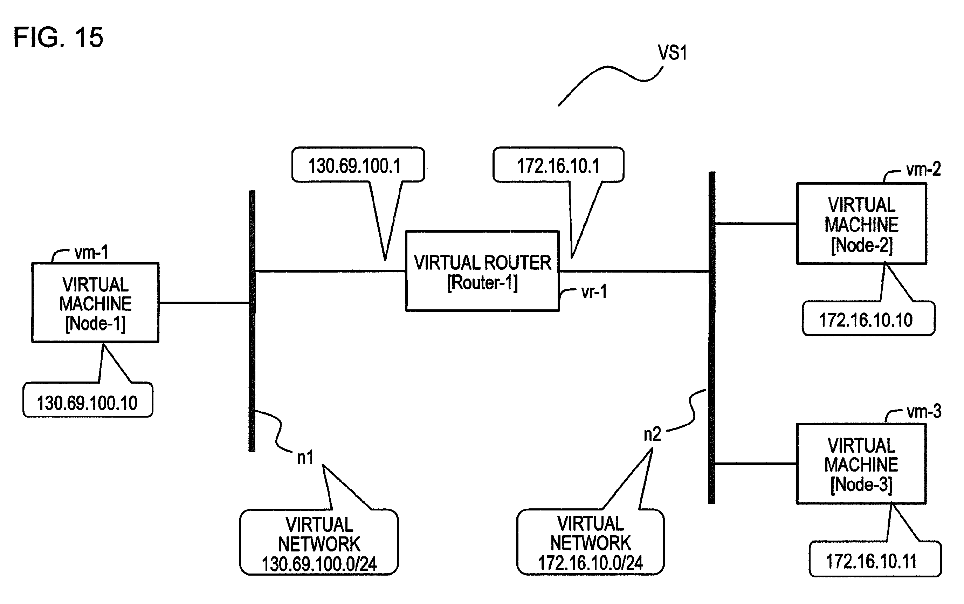

Then, according to FIG. 15, a constitution example of the virtual system VS1 in the embodiment will be described. In addition, in FIG. 16 - FIG. 20, an example of the virtual network database 141, the virtual machine database 142, the virtual router database 143 and the physical machine database 144 correspond to the virtual system VS1 depicted by FIG. 15.

Below, the virtual network database 141 is described as virtual network DB. The virtual machine database 142 is described as virtual machine DB as follows. The virtual router database 143 is described as virtual router DB as follows. The physical machine database 144 is described as physical machine DB as follows.

FIG. 15 is a diagram explaining a constitution example of virtual system VS1 according to the embodiment. In FIG. 15, the virtual system VS1 includes the virtual machines "Node-1" ... "Node-3" (vm-1 - vm-3) and the virtual router "Router-1" (vr-1). In addition, the virtual system VS1 has virtual networks "Net-1" (n1) and "Net-2" (n2).

The range of the IP address of the virtual network "Net-1" n1 is "130.69.100.0/24". The range of the IP address of the virtual network "Net-2" n2 is "172.16.10.0/24". In addition, the IP address of the connection interface to the virtual network "Net-1" n1 of the virtual router "Router-1" vr-1 is "130.69.100.1". In addition, the IP address of the connection interface to the virtual network "Net-2" n2 of the virtual router "Router-1" vr-1 is "172.16.10.1".

In addition, the virtual router "Router-1" vr-1 has an NAT conversion rule. The NAT conversion rule is a rule to convert the IP address "133.11.0.11" into an IP address of the virtual machine "Node-2" vm-2 or the virtual machine "Node-3" vm-3.

The IP address of the virtual machine "Node-1" vm-1 is "130.69.100.10", and the virtual machine "Node-1" n1 connects with the virtual network "Net-1" n1. In addition, the IP address of the virtual machine "Node-2" vm-2 is "172.16.10.10", and the IP address of the virtual machine "Node-3" vm-3 is "172.16.10.11". The virtual machine "Node-2" vm-2 and the virtual machine "Node-3" vm-3 connect with the virtual network "Net-2" n2.

In the embodiment, a case to send a packet to the virtual machine "Node-2" vm-2 or the virtual machine "Node-3" vm-3 from the virtual machine "Node-1" vm-1 based on the network constitution of virtual system VS1 depicted by FIG. 15 is exemplified.

### [Virtual network DB]

FIG. 16 is a diagram indicating an example of the virtual network DB 141 depicted by FIG. 14. The virtual network DB 141 is a database having a network address and the information of connected virtual machine vm and router for every virtual network. The virtual network DB 141 in FIG. 16 supports the virtual system VS1 depicted by FIG. 15.

The virtual network DB 141 has, for example, an item "ID", an item "network address", an item "net mask", an item "virtual machine" and an item "router". The item "ID" indicates the identification information of the virtual network. An item "network address" is the network address of the virtual network. The item "net mask" is the subnet mask of the virtual network. The item "virtual machine" indicates identification information of the virtual machine vm belonging to the virtual network. The item "router" indicates a router to connect to the virtual network.

According to the example of virtual network DB 141 depicted by FIG. 16, the network address of the virtual network ID "Net-1" n1 is "130.69.100.0", and the subnet mask is "255.255.255.0". In addition, the virtual machine "Node-1" vm-1 belongs to the virtual network ID "Net-1" n1. In addition, the virtual network ID "Net-1" n1 connects with the router "Router-1" vr-1.

In addition, the network address of virtual network ID "Net-2" n2 is "172.16.10.0", and the subnet mask is "255.255.255.0". In addition, the virtual machine "Node-2, Node-3" vm-2, vm-3 belong to the virtual network ID "Net-2" n2. In addition, the virtual network ID "Net-2" n2 connects with the router "Router-1" vr-1.

### [Virtual machine DB]

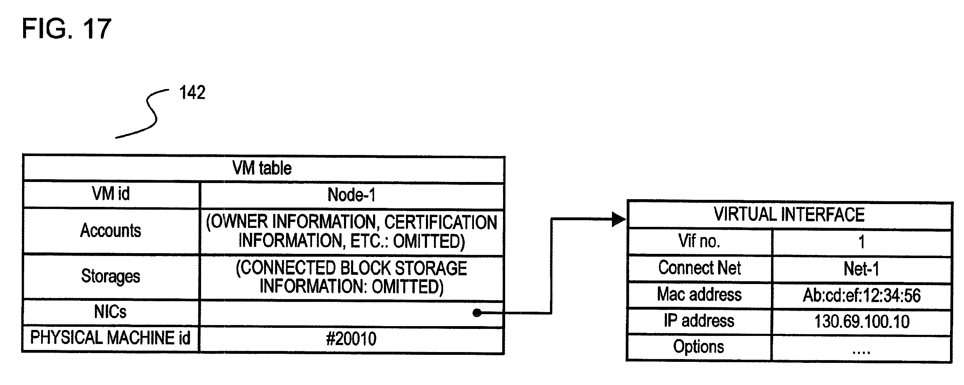

FIG. 17 is a first diagram indicating an example of virtual machine DB 142 depicted by FIG. 14. The virtual machine DB 142 is a database having a property and network information of the virtual machine vm for every virtual machine vm constituting virtual system VS. The virtual machine DB 142 in FIG. 17 supports virtual system VS1 depicted by FIG. 15.

The virtual machine DB 142 has, for example, an item "VM id", an item "Accounts", an item "Storage", an item "NICs" and an item "physical machine id". The item "VM id" indicates information to distinguish virtual machine vm. The item "Account" indicates a property of the virtual machine vm and indicates owner information or certification information. The item "Storage" indicates a property of virtual machine vm and indicates configuration information (block storage information) that the virtual machine vm connects with. The item "NICs" indicates network information of the virtual machine vm and indicates the information of the virtual interface that the virtual machine vm has. When there are multiple virtual interfaces, the item "NICs" has the information of plural virtual interfaces. The item "physical machine id" is identification information of the server device 10 equipped with the virtual machine vm.

In addition, the virtual machine DB 142 manages the MAC address of the virtual interface and the IP address as information of the virtual interface of the networks.

The virtual machine DB 142 has, as information of the virtual interface of the network, for example, an item "Vif no.", an item "Connect Net", an item "Mac Address", an item "IP address" and an item "Option". The item "Vif no." is the identification information of the virtual interface. The item "Connect Net" indicates the virtual network ID which the virtual interface connects with. The item "Mac Address" indicates the MAC address of the virtual interface. The item "IP address" indicates the IP address of the virtual interface. The item "Option" is the addition information of the virtual interface.

According to the example of virtual machine DB 142 depicted by FIG. 17, the identification information of the server device 10 equipped with the virtual machine "Node-1" vm-1 is "#20010". In addition, the virtual machine "Node-1" vm-1 connects with the virtual network ID "Net-1" n1 through a virtual interface. In addition, the MAC address of the virtual interface of the virtual machine "Node-1" vm-1 is "Ab:cd:ef:12:34:56", and the IP address is "130.69.100.10".

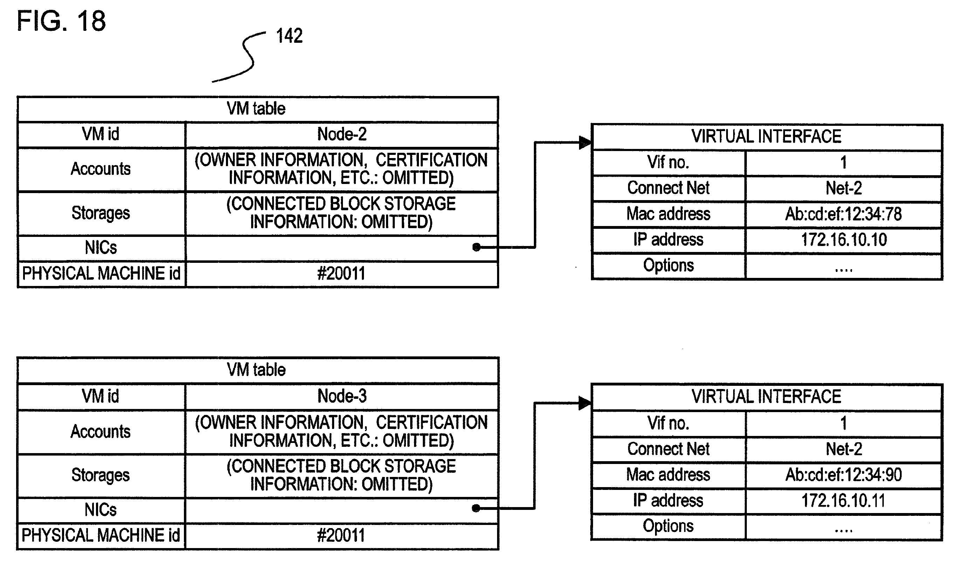

FIG. 18 is a second diagram indicating an example of virtual machine DB 142 depicted by FIG. 14. FIG. 18 represents information of the virtual machines "Node-2" vm-2 and "Node-3" vm-3 in the virtual machine DB 142.

According to the example of the virtual machine DB 142 depicted by FIG. 18, the identification information of the physical machine equipped with the virtual machine "Node-2" vm-2 is "#20011" and the virtual machine "Node-2" vm-2 connects to the virtual network ID "Net-2" n2. In addition, the MAC address of the virtual machine "Node-2" vm-2 is "Ab:cd:ef:12:34:78" and the IP address is "172.16.10.10". In addition, the identification information of the physical machine that the virtual machine "Node-3" vm-3 works is "#20011" and the virtual machine "Node-3" vm-3 connects to the virtual network ID "Net-2" n2. In addition, the MAC address of the virtual machine "Node-3" vm-3 is "Ab:cd:ef:12:34:90", and the IP address is "172.16.10.11".

### [Virtual router DB]

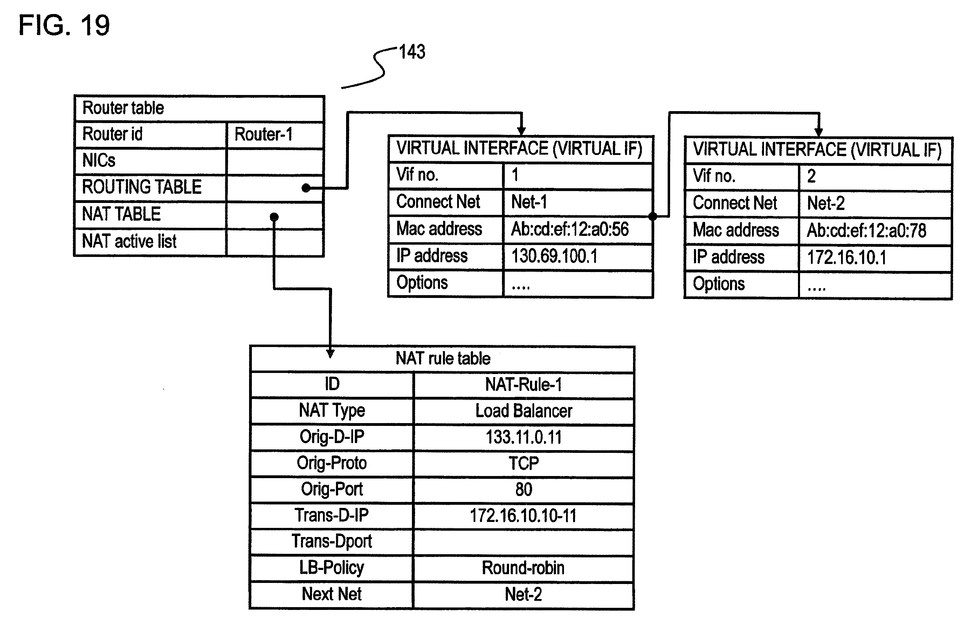

FIG. 19 is a diagram indicating an example of the virtual router DB 143 depicted by FIG. 14. The virtual router DB 143 in FIG. 19 supports the virtual system VS1 which is illustrated in FIG. 15. The virtual router DB 143 is a database managing the information of the virtual interface of the virtual router and routing information, the NAT information.

The virtual router DB 143 has, for example, an item "Router id", an item "NICs", an item "routing table", an item "NAT table" and an item "NAT active list". The item "Router id" indicates the identification information of the virtual router. The item "NICs" indicates the information of the virtual interface. The item "routing table" has the information of the routing table (not illustrated in FIG. 19) of the virtual router. The item "NAT table" has a rule of the NAT conversion. The item "NAT active list" has the information of the occurring NAT session.

According to the example of the virtual router DB 143 depicted by FIG. 19, the virtual router "Router-1" vr-1 has two virtual interfaces. Each item of the virtual interface depicted by FIG 19 is same as described by virtual interface explanation of virtual machine DB 142 depicted by FIG. 17, FIG. 18.

The first virtual interface connects with the virtual network ID "Net-1" n1, and the MAC address is "Ab:cd:ef:12:a0:56", and the IP address is "130.69.100.1". In addition, the second virtual interface connects with the virtual network ID "Net-2" n2, and the MAC address is "Ab:cd:ef:12:a0:78", and the IP address is "172.16.10.1".

In addition, the NAT table of virtual router DB 143 depicted by FIG. 19 has, for example, an item "ID", an item "NAT Type", an item "Orig-D-IP", an item "Orig-Proto" and an item "Orig-Port". In addition, the NAT table further has an item "Trans-D-IP", an item "Trans-Dport", an item "LB-Policy" and an item "Next Net".

The item "ID" is the identification information of the NAT table. The item "NAT Type" indicates the classification of the NAT table. The item "Orig-D-IP" indicates the IP address of the destination of the origin of conversion. The item "Orig-Proto" indicates the protocol of the origin of conversion. The item "Orig-Port" indicates the port number of the origin of conversion. The item "Trans-D-IP" indicates the IP address of the destination of the conversion. The item "Trans-Dport" indicates a port number of the destination of conversion. The item "LB-Policy" indicates a method of load balancer when the classification of the NAT table is the load balancer. The item "Next Net" indicates virtual network ID transferring a packet after the NAT conversion.

According to the example of the NAT table of virtual router DB 143 depicted by FIG. 19, because the item "NAT Type" of NAT table "NAT-Rule-1" is "Load Balancer", the NAT table is the table converting by the load balancer. In addition, according to the NAT table "NAT-Rule-1", the IP address "133.11.0.11" of the destination of the origin of conversion is converted into the IP address "172.16.10.10" or the IP address "172.16.10.11". In addition, according to the NAT table "NAT-Rule-1," the method of the load balancer is "Round robin", and the next virtual network ID is "Net-2" n2.

In addition, in the example of virtual router DB 143 in FIG. 19, the virtual router "Router-1" does not have an entry of "NAT active list". Therefore, the virtual router DB 143 depicted by FIG. 19 is the state that an NAT session does not produce.

### [Physical machine DB]

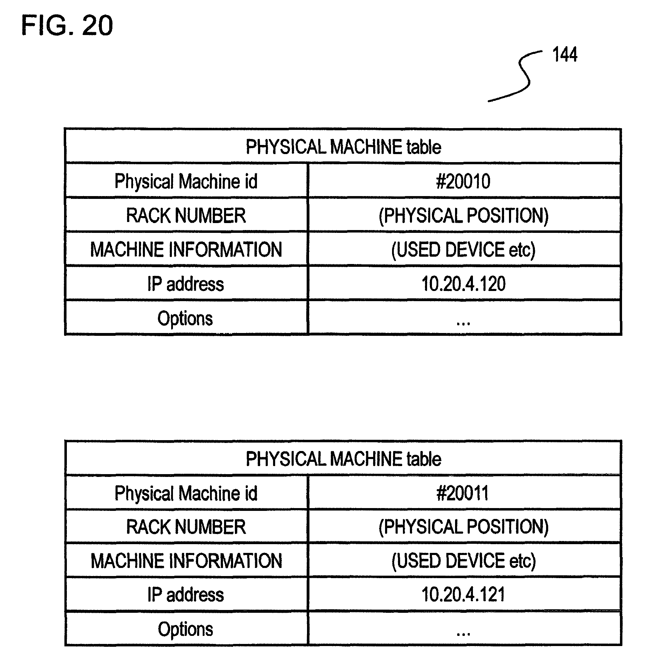

FIG. 20 is a diagram indicating an example of physical machine DB 144 depicted by FIG. 14. The physical machine DB 144 is a database having information of physical machine (server device) 10.

The physical machine DB 144 has, for example, an item "physical machine id", an item "rack number", an item "machine information", an item "IP address" and an item "Option". The item "physical machine id" indicates identification information of server device 10. The item "rack number" is a rack number to locate the server device 10 and indicates a physical position of the server device 10. The item "machine information" indicates the information such as the devices of which the server device 10 uses. The item "IP address" indicates an IP address of the server device 10. The item "Option" indicates additional information of the server device 10.

According to the example of the physical machine DB 144 depicted by FIG. 20, the IP address of server device "#20010" is "10.20.4.120", and the IP address of server device "#20011" is "10.20.4.121". In addition, according to the virtual machine DB 142 in FIG. 17 and FIG. 18, the virtual machine "Node-1" vm-1 works in the server device "#20010", and the virtual machine "Node-2" vm-2 and the virtual machine "Node-3" vm-3 work in the server device "#20011".

The software block of management server device 20 depicted by FIG. 1, FIG. 3 is described according to FIG. 14 - FIG. 20. Then, the hardware constitution of the server device 10 depicted by FIG. 1, FIG. 3 will be described according to FIG. 21.

### [Server device]

FIG. 21 is a diagram explaining hardware constitution of server device 10 depicted by FIG. 1, FIG. 3. In FIG. 21, same elements as that in FIG. 1 are indicated by same sign in FIG 1.

The server device 10 has, for example, a CPU (Central Processing Unit: CPU) 201, a memory 202 such as RAM (Random Access Memory: RAM) 220 and nonvolatile memory 221, a communication interface device 203. The all parts are connected through bus 204 mutually. The communication interface device 203 connects with the management server device 20 (referring to FIG 3) through the intranet 50.

The CPU 201 connects to the memory 202 through the bus 204 and controls the whole of the server device 10. The RAM 220 in the memory 202 memorizes the data of which the CPU 201 processes. The nonvolatile memory 221 in the memory 202 includes hypervisor program storage domain Hyp and virtual router program storage domain vrp. In addition, the nonvolatile memory 202 includes data storage domain vmda of virtual machine "a" and data storage domain vmdb of virtual machine "b". The nonvolatile memory 202 includes an HDD (Hard disk drive: HDD), and a nonvolatile semiconductor storage device.

The hypervisor program (following, called as hypervisor program Hyp) in the hypervisor program storage domain Hyp realizes processing of the hypervisor Hy by processing of the CPU 201 in the embodiment. The virtual router program (following, called as virtual router program vrp) in the virtual router program storage domain vrp realizes processing of the virtual router vr by processing of the CPU 201 in the embodiment.

The virtual machine a data (following, called as virtual machine a data vmda) in the virtual machine a data storage domain "vmda" are referred and updated by the hypervisor Hy to work as the virtual machine vma. The virtual machine b data (following, called as virtual machine b data vmdb) in the virtual machine b data storage domain "vmdb" are referred and updated by the hypervisor Hy to work as the virtual machine vmb.

### (Software block diagram of virtual router)

FIG. 22 is a diagram indicating the software block diagram of the virtual router program vrp in the server device 10 depicted by FIG. 21. The virtual router program vrp depicted by FIG. 22 has RX processing module 401, TX processing module 402, proxy ARP(Address Resolution Protocol: ARP) module 403, TX session table st-t, and RX session table st-r.

The RX processing module 401 and the TX processing module 402 perform the transmission and reception processing of packet, the attachment and detachment of header in the tunnel packet, the processing of the broadcast communication, and reply processing of the packet except the IP. In addition, the RX processing module 401 and the TX processing module 402 in the embodiment performs the update processing of the tunnel packet PKa based on the route information that the IaaS control program 310 provides more. In addition, the RX processing module 401 performs transmission and reception processing of the physical machine update packet PKb.

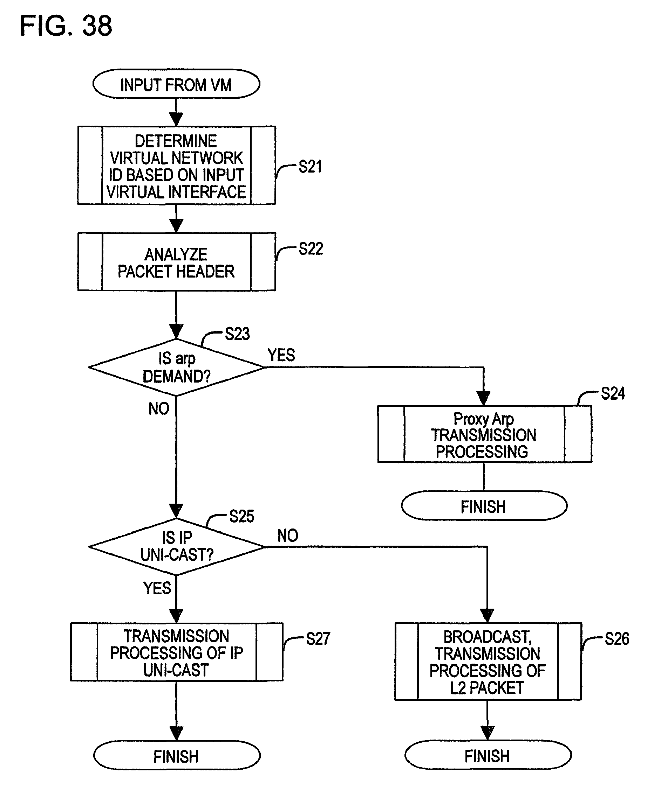

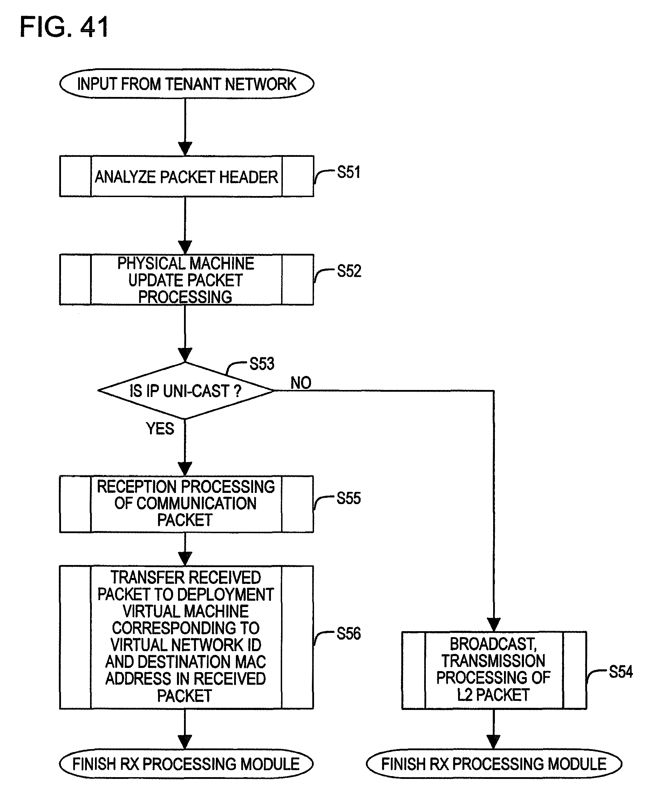

The processing of the TX processing module 402 will be described later according to flow charts in FIG. 38 - FIG. 40. The processing of the RX processing module 401 will be described later according to flow charts in FIG. 41 - FIG. 46. In addition, the proxy-ARP module 403 performs proxy-ARP processing. In other words, the proxy-ARP module 403 answers the ARP demand from the apparatus in the network on behalf of a destination of inquiry.

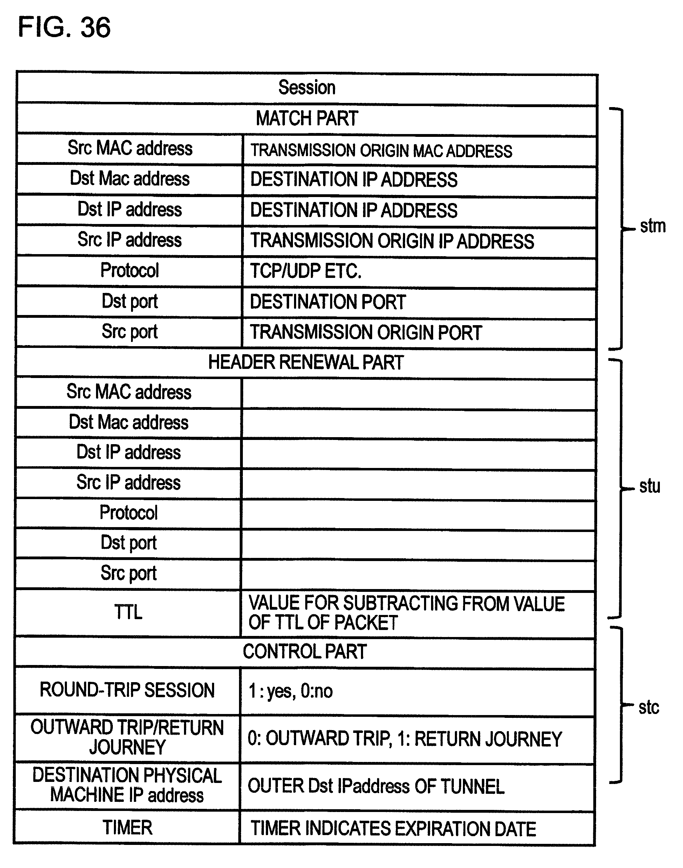

The TX session table st-t has the session information st for the transmission processing, and the RX session table st-r has the session information st for receiving process. The details of the TX session table st-t and the RX session table st-r will be described later in FIG. 36.

### [IaaS control program: simulation processing]

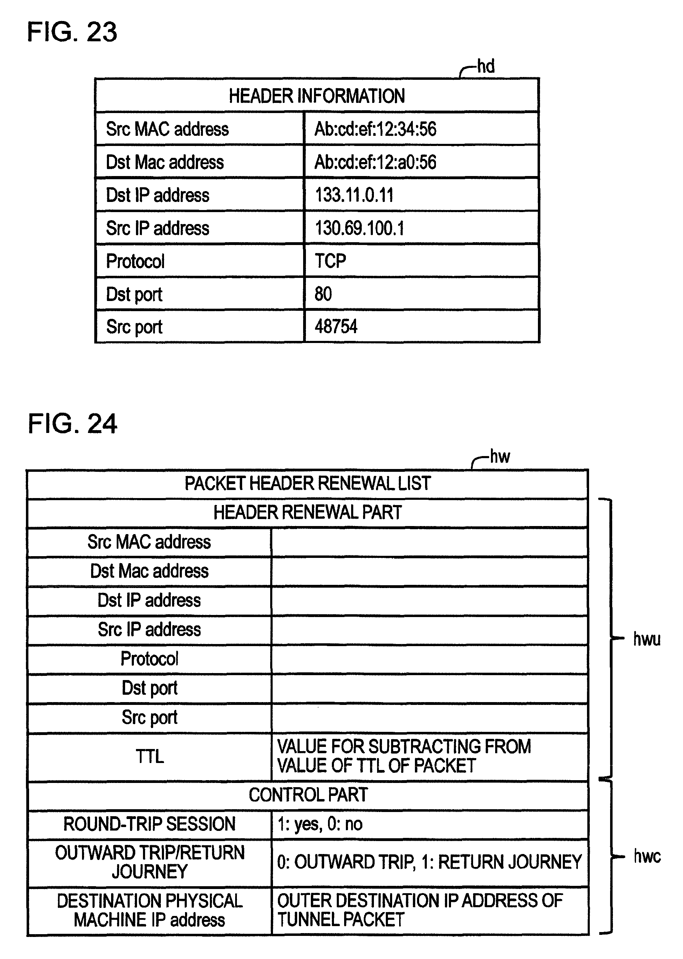

Then, according to FIG. 23 - FIG. 35, the simulation processing by the IaaS control program 310 in the management server device 20 will be described.

### (Simulation processing: input information)

FIG. 23 is a diagram indicating the input information of the simulation processing by the network management module 312 in the IaaS control program 310 depicted by FIG. 14. The input information indicated by FIG. 23 is, for example, header information hd of the TCP/IP packet that the virtual router vr received from the virtual machine vm.

The header information hd of FIG. 23 has an Item "Src Mac Address", an item "Dst Mac Address", an item "Dst IP address", an item "Src IP address", an item "Protocol", an item "Dst port" and an item "Src port".

The item "Src Mac Address" represents the MAC address of the origin of transmission of the packet. The item "Dst Mac Address" represents the MAC address of the destination of the packet. The item "Dst IP address" represents the IP address of the destination of the packet. The item "Src IP address" represents the IP address of the origin of transmission of the packet. The item "Protocol" represents the protocol of the packet. The item "Dst port" represents the port number of the destination of the packet. The item "Src port" represents the port number of the origin of transmission of the packet.

The virtual router "Router-1" vr-1 receives a packet having the header information hd depicted by FIG. 23 from the virtual machine "Node-1" vm-1. A packet depicted by FIG. 23 is a packet to IP address "133.11.0.11" for the NAT conversion processing from the virtual machine "Node-1" vm-1.

Therefore, the MAC address of the origin of transmission, that the item "Src Mac Address" of header information hd in FIG. 23 indicates, represents a MAC address of the virtual machine "Node-1" vm-1. In addition, the MAC address of the destination represented by the item "Dst Mac Address" of header information hd represents MAC address "Ab:cd:ef:12:a0:56" of the virtual network "Net-1" n1 of the virtual router "Router-1" vr-1. In addition, the IP address of the destination represented by the item "Dst IP address" of header information hd indicates IP address "133.11.0.11" of the origin of conversion of the NAT conversion. In addition, the IP address of the origin of transmission represented by the item "Src IP address" of header information hd indicates IP address "130.69.100.10" of the virtual machine "Node-1" vm-1. In addition, the item "Dst port" of header information hd represents port number "80", and the item "Src port" represents port number "48754".

### (Simulation processing: output information)

FIG. 24 is a diagram indicating the output information of the simulation processing by the network management module 312 depicted by FIG. 14. The network management module 312 performs simulation processing based on the header information hd of the packet depicted by FIG. 23, and outputs packet header renewal list hw depicted by FIG. 24 as the route information.

The packet header renewal list hw has an item of header renewal part hwu and an item of control part hwc. The item of header renewal part hwu represents an item for the renewal among the header information hd of the packet that the virtual router vr transfers. In addition, among items of the header renewal part hwu, an item of blanks is the item except renewal target.

The header renewal part hwu has item "TTL" in addition to the item of header information hd depicted by FIG. 23. The item "TTL" is a value for subtracting from a value of the TTL (Time To Live: TTL) of the header information of the user packet that the tunnel packet PKa has. The value of the TTL represents validity period of tunnel packet PKa.

The item of control part hwc has, for example, an item "round-trip session", an item "outward trip / return journey" and an item "destination physical machine IP address". The item "round-trip session" represents whether a packet is tunnel packet PKa of the round-trip session. In the embodiment, the value "1" is set when the packet is tunnel packet PKa of the round-trip session and the value "0" is set when the packet is not tunnel packet PKa of the round-trip session.

The item "outward trip / return journey" indicates whether the packet is tunnel packet PKa of the outward trip or tunnel packet PKa of the return journey. In the embodiment, the value "0" indicates the tunnel packet PKa of the outward trip, and the value "1" indicates the tunnel packet PKa of the outward trip. The item "destination physical machine IP address" represents an IP address (outer destination IP address) to appoint as a destination of tunnel packet PKa.

### (Summary of the simulation processing)

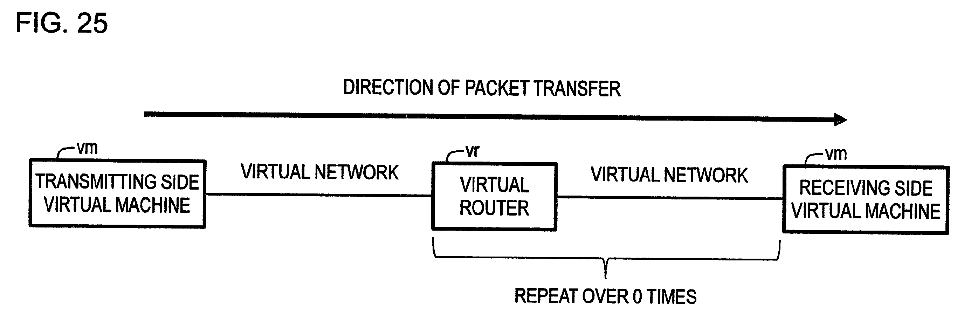

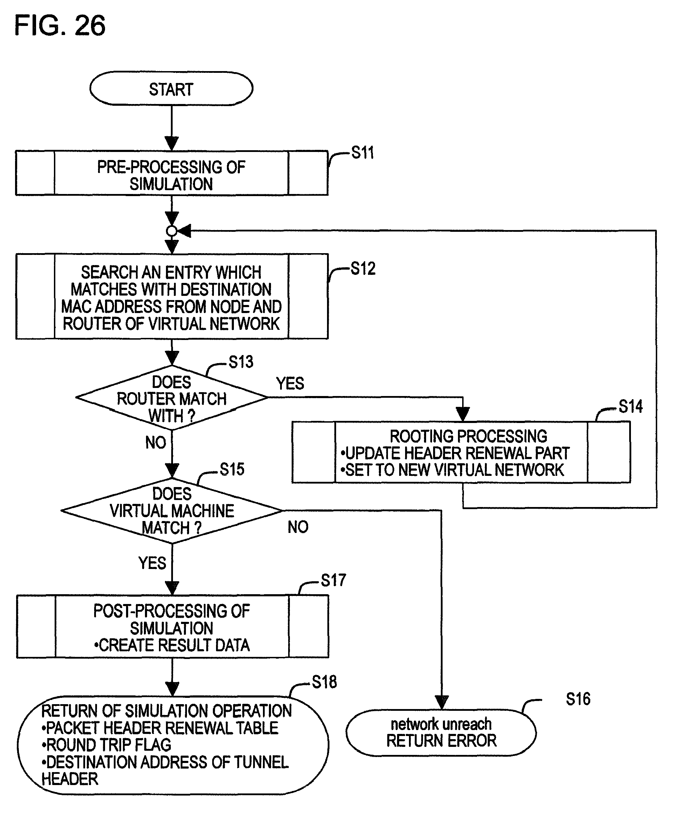

FIG. 25 is a diagram explaining a summary of the simulation processing by the network management module 312 depicted by FIG. 14. In the virtual network, the packet arrives at virtual machine vm of the destination via one or more virtual router vr from the virtual machine vm of the origin of transmission. Therefore, the routing processing by the virtual router vr depicted by FIG. 25 is repeated by the simulation processing. Therefore, in the flow chart to explain in FIG. 26, the routing processing (S14 in FIG. 26) is repeated over 0 times.

### (Flow of the simulation processing)

FIG. 26 is a diagram of flow chart explaining simulation processing by the network management module 312 depicted by FIG. 14. The network management module 312 is input start virtual network ID and the header information hd of and the user packet which is explained in FIG. 23. The start virtual network ID is ID of the virtual network where the MAC address of the origin of transmission of the packet, of which the item "Src Mac Address" of header information hd of the user packet represents, belongs to.

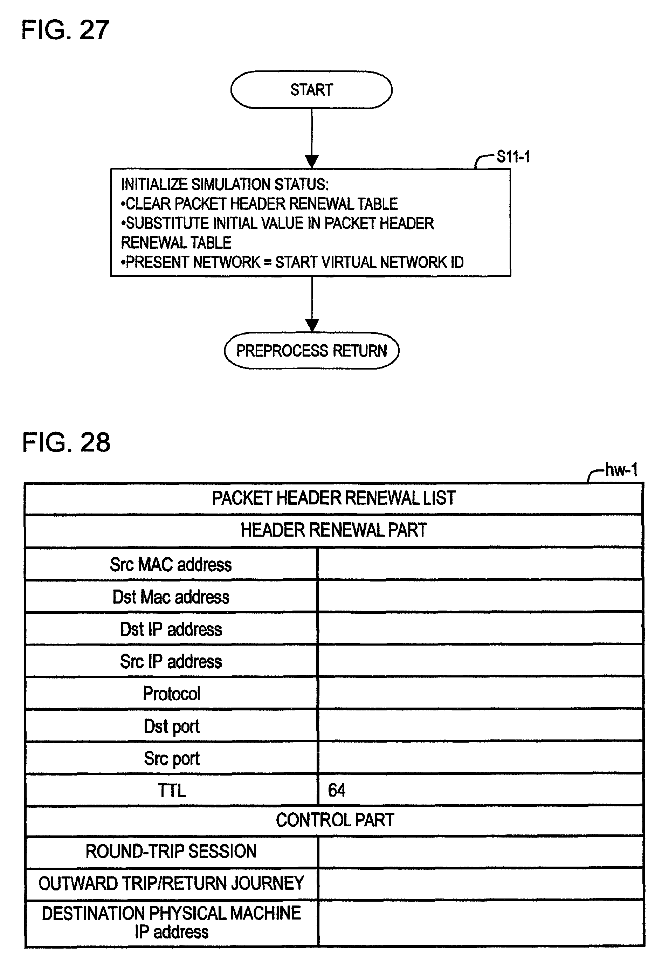

S11: The network management module 312 pre-processes the simulation. The details of the pre-processing of the simulation will be described according to a flow chart in FIG. 27.

### (Simulation processing: pre-processing (S11))

FIG. 27 is a diagram of flow chart explaining processing of the process S11 in the network management module 312 depicted by FIG. 26.

S11-1: The network management module 312 performs the initialization processing of simulation state as pre-processing of the simulation. That is the network management module 312 initializes the packet header renewal list hw depicted by FIG. 24. And the network management module 312 substitutes initial value "64" for the item "TTL" of the packet header renewal list hw. In addition, the network management module 312 assumes the input start virtual network ID to a present virtual network ID.

### (Packet header renewal list (S11-1) after initialization)

FIG. 28 is a diagram indicating the packet header renewal list hw-1 after the initialization by the process S11-1. In the virtual system VS1 (referring to FIG. 15) of the embodiment, the virtual machine "Node-1" vm-1 of the origin of transmission of the packet connects with the virtual network "Net-1" n1. Therefore, the present virtual network ID is the virtual network "Net-1" n1. In addition, as described in FIG. 27, the value of the item "TTL" of the packet header renewal list hw-1 after the initialization is "64".

Then the explanation is back to the flow chart in FIG. 26.

S12: The network management module 312 refers to the virtual machine DB 142 (referring to FIG. 17, FIG. 18) and the virtual router DB 143 (referring to FIG. 19). And, the network management module 312 searches an entry of which the MAC address agrees with the MAC address of the destination that the item "Dst Mac Address" of header information hd of the user packet represents, from an entry of the virtual machine DB 142 and the virtual router DB 143.

S13: The network management module 312 determines whether or not detected an entry which agrees with the item "Dst Mac Address" of user packet header information hd from the virtual router DB 143 (FIG. 19).

In the embodiment, as described in FIG. 23, the item "Dst Mac Address" of user packet header information hd is MAC address "Ab:cd:ef:12:a0:56" of the virtual network "Net-1" n1. Therefore, the network management module 312 detects an entry of virtual router "Router-1" vr-1 where a MAC address accords with the MAC address "Ab:cd:ef:12:a0:56" from the virtual router DB 143.

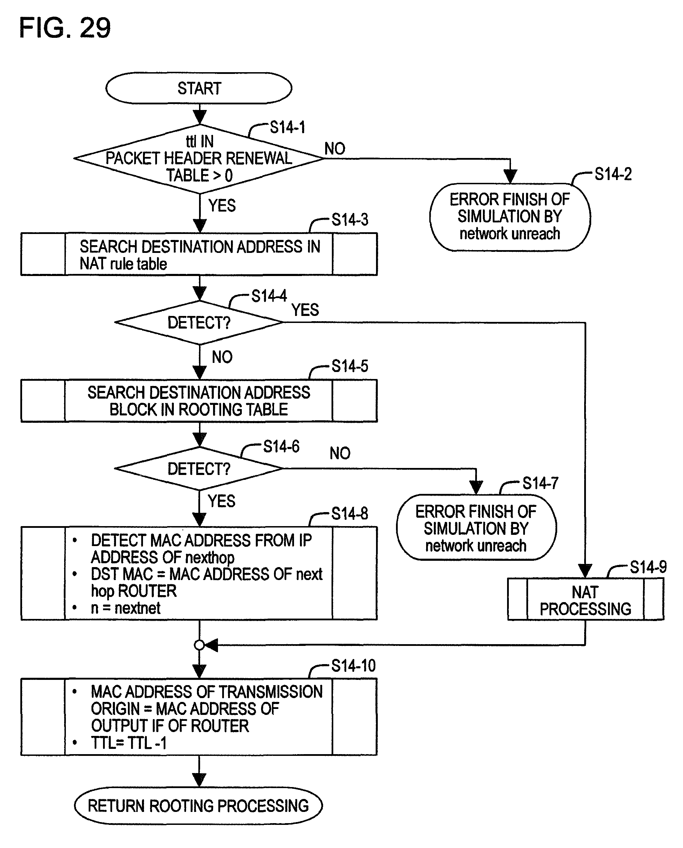

S14: When detecting an entry which agrees with as a result of search processing of the process S13 (yes of S13), the network management module 312 performs the routing processing of user packet. The details of the processing of the process S14 will be described according to a flow chart in FIG. 29.

### (Simulation processing: routing processing (S14))

FIG. 29 is a diagram of flow chart explaining processing of the process S14 in the network management module 312 depicted by FIG. 28. The process S14 represents the routing processing of packet. The routing processing performs update process of the packet header renewal list hw and the transition of the virtual network.

S14-1: The network management module 312 determines whether a value of the item "TTL" of the packet header renewal list hw is bigger than value "0".

S14-2: When the value of the item "TTL" of the packet header renewal list hw is less than value "0" (no of S14-1), by time-out, the network management module 312 finishes by an error. The network management module 312 outputs error information "network unreachable" that a user packet does not arrive at the address of the destination.

S14-3: When the value of the item "TTL" in the packet header renewal list hw is bigger than value "0" (yes of S14-1), the network management module 312 searches the NAT rule table (NAT rule table) of the virtual router which is detected. The network management module 312 searches the entry that the item "Orig-D-IP" agrees with the IP address of the destination that the item "Dst IP address" of header information hd of the user packet indicates from the entry of the NAT rule table in the virtual router DB 143 (referring to FIG. 19).

S14-4: The network management module 312 determines whether an agreed entry is detected as a result of search processing of the process S14-3. In the embodiment, the network management module 312 detects the entry of which the item "Orig-D-IP" agrees with the IP address "133.11.0.11" of the destination of header information hd, from the entry (referring to FIG. 19) in the NAT rule table of the virtual router "Router-1" vr-1 (yes of S14-4).

S14-5: When the agreed entry is not detected (no of S14-4), it represents that a user packet is not a packet for the NAT conversion. The network management module 312 searches the address block of the IP address of the destination in the user packet header information hd from the routing table of the virtual router which is detected.

S14-6: As a result of search processing of process S14-5, the network management module 312 determines whether an address block is detected.

S14-7: When the address block is not detected (no of S14-6), It is indicated that the communication has not been reached. Therefore, the network management module 312 outputs the error information "network unreachable" which indicates that a network does not arrive at and finishes as an error.

S14-8: When the address block is detected as a result of search processing of the process S14-5 (yes of S14-6), the network management module 312 updates the packet header renewal list hw.

Especially, the network management module 312 acquires an IP address of next hop in the routing table and acquires the MAC address corresponding to the IP address concerned. And the network management module 312 updates the MAC address which is acquired in the item "Dst Mac Address" of the packet header renewal list hw. In addition, the network management module 312 updates the present virtual network ID in the virtual network ID in which the next hop indicates.

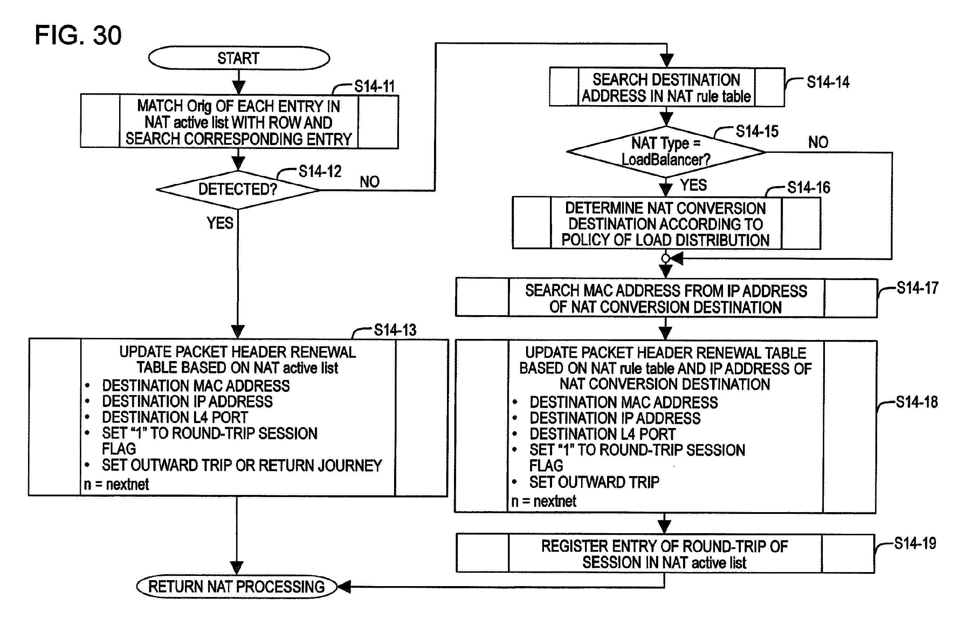

S14-9: When the agreed entry of the NAT table is detected as a result of the search processing of the process S14-3 (yes of S14-4), it is indicated that a user packet is a packet for the NAT conversion. Therefore, the network management module 312 performs the NAT conversion processing based on the entry in the NAT rule table which is detected. In addition, it is indicated that a packet is a round-trip packet when the entry of the NAT table is detect. The NAT conversion processing will be described according to a flow chart in FIG. 30.

### (Simulation processing: NAT conversion processing (S14-9))

FIG. 30 is a diagram of flow chart explaining NAT conversion processing of the process S14-9 in the network management module 312 depicted by FIG. 29.

S14-11: The network management module 312 searches an entry that an appointed item matches with the header information hd from the entry of the NAT active list in the NAT rule table which is detected. The appointed item is the item "Orig-D-IP", the item "Orig-Photo" and the item "Orig-Port".

S14-12: The network management module 312 determines whether the entry of the NAT active list that an appointed item matches with is detected.

S14-13: When the entry of the NAT Active list that appointed item matches with is detected (yes of S14-12), it is indicated that the NAT conversion processing corresponding to the header information hd packet occurs. The network management module 312 updates the packet header renewal list hw based on the entry of the NAT Active list which is detected.

Especially, the network management module 312 updates the MAC address corresponding to the IP address after the conversion that the item "Trans-D-IP" of the entry of the NAT Active list which is detected in the item "Dst Mac Address" of the packet header renewal list hw. In addition, the network management module 312 updates an IP address after the conversion in the item "Dst IP address" of the packet header renewal list hw. In addition, the network management module 312 updates a value of the item "Trans-Port" of the entry of the NAT Active list which is detected in the item "Dst port" of the packet header renewal list hw.

In addition, the network management module 312 updates an item "round-trip session" of the packet header renewal list hw to a value "1" and updates the item "outward trip / return journey" to a value "0/1". When the entry of the NAT Active list is detected, it is indicated that the value of the item "round-trip session" is "1". In addition, the network management module 312 updates the value of the item "outward trip / return journey" based on the entry of the NAT Active list which is detected. In addition, the network management module 312 updates the virtual network ID in which the item "Next Net" of the NAT rule table represents to the current virtual network ID.

S14-14: When the entry of the NAT Active list that an appointed item matches with is not detected (no of S14-12), the network management module 312 detects the NAT rule table. The network management module 312 detects the entry of the NAT rule table that item "Trans-D-IP" matches with the IP address of the destination that the item "Dst IP address" in the header information hd of the user packet indicates.

In the embodiment, the entry of the NAT Active list that an appointed item matches with does not exist at the start. Therefore, the network management module 312 does not detect the entry of the NAT Active list that an appointed item matches with (no of S14-12). And the network management module 312 detects the entry of the NAT rule table that the item "Trans-D-IP" matches with IP address "133.11.0.11" of the destination of header information hd of the user packet (S14-14).

S14-15: The network management module 312 determines whether the item "NAT Type" of the entry of the NAT rule table which is searched is "Load Balancer".

S14-16: when the item "NAT Type" is "Load Balancer" (yes of S14-15), the network management module 312 decides the virtual machine vm of the destination in the packet according to policy of the load distribution. In addition, the network management module 312 does not carry out the process S14-16 when the item "NAT Type" is not "Load Balancer" (no of S14-15).

According to the virtual router DB 143 depicted by FIG. 19, the item "NAT Type" of the entry in the NAT rule table which is detected is "Load Balancer" in the embodiment. Therefore, the network management module 312 decides that the virtual machine vm of the destination is the virtual machine "Node-2" vm-2 according to the technique of the round robin (Round robin) of item "LB-Policy" of the entry. And the network management module 312 acquires IP address "172.16.10.10" of the virtual machine "Node-2" vm-2.

S14-17: The network management module 312 acquires the MAC address of the virtual machine of the destination from an IP address after the NAT conversion processing. In the embodiment, the network management module 312 acquires the MAC address "Ab:cd:ef:12:34:78" of the virtual machine "Node-2" vm-2 with reference to the virtual machine DB 142 (referring to FIG. 14).

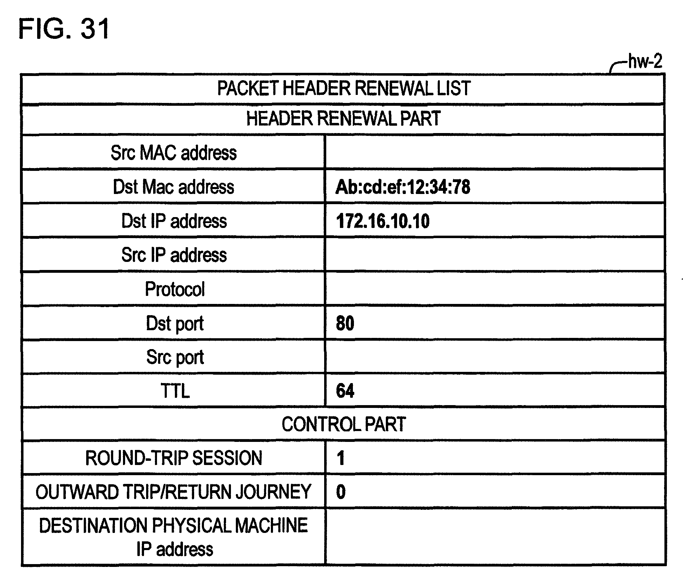

S14-18: The network management module 312 updates the packet header renewal list hw based on the item of the entry of the NAT rule table which is detected and the IP address which is acquired in the process S14-17. The details of the update processing will be described later according to FIG. 31.

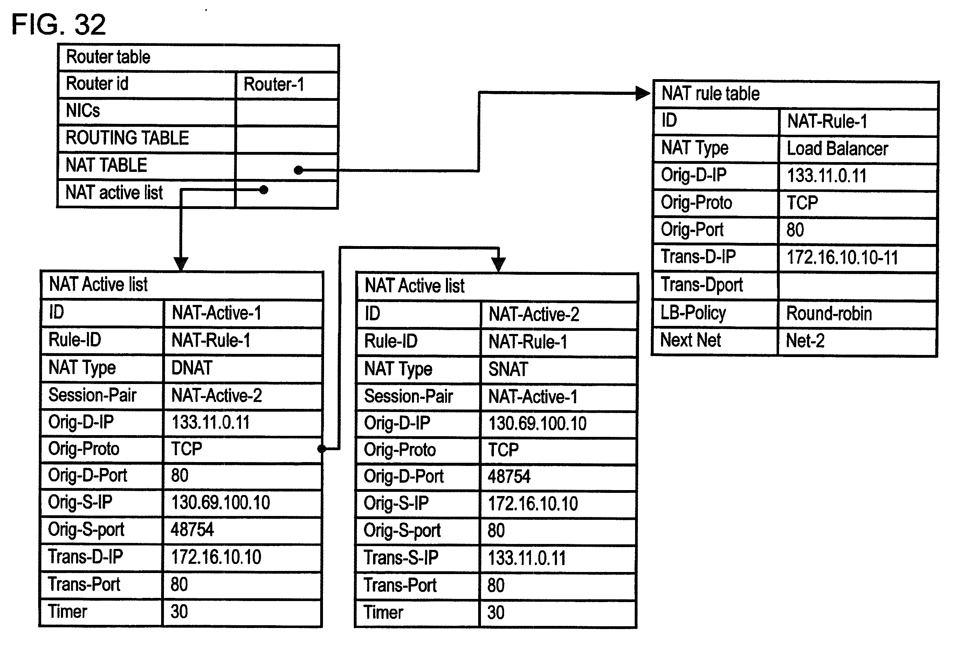

S14-19: The network management module 312 registers the NAT Active list with an entry of the virtual router vr which is detected in the virtual router DB 143 (referring to FIG. 19). The network management module 312 registers the entry of the round-trip session with the NAT Active list to maintain the state of the Load Balancer. The registration example of the NAT Active list will be described later according to FIG. 32.

### (Simulation processing (S14-18): packet header renewal list after NAT conversion processing)

FIG. 31 is a diagram explaining an update example of the packet header renewal list hw of the process S14-18 in the flow chart of FIG. 30.

The network management module 312 updates the item "Dst Mac Address" of the packet header renewal list hw-2 by the MAC address "Ab:cd:ef:12:34:78" of the virtual machine "Node-2" vm-2 of the destination after the NAT conversion processing. In addition, the network management module 312 updates the item "Dst IP address" of the packet header renewal list hw-2 by the IP address "172.16.10.10" of the virtual machine "Node-2" vm-2 of the destination. In addition, the network management module 312 updates the item "Dst port" of the packet header renewal list hw-2 by a value "80" of item "Orig-Port" in the NAT rule table.

In addition, the network management module 312 updates value "1" for the item "round-trip session" in the packet header renewal list hw-2. In addition, the network management module 312 updates value "0" (outward trip) for the item "outward trip / return journey" of the packet header renewal list hw-2, because there is not the NAT Active list. In addition, the network management module 312 updates the virtual network ID "Net-2" n2 of item "Next Net" of the NAT rule table to the current virtual network ID.

### (Simulation processing (S14-19): registration of the NAT Active list)

FIG. 32 indicates an example of the NAT Active list of the round-trip session which is registered in the process S14-19 of the flow chart of FIG. 30.

FIG. 32 indicates an example of the NAT Active list of an outward trip and a return journey of the virtual router "Router-1" vr-1. In addition, the NAT rule table of the virtual router "Router-1" vr-1 indicted in FIG. 32 is similar to the virtual router DB 143 depicted by FIG. 19.

The NAT Active list has an Item "ID", an item "Rule-ID", an item "NAT Type", an item "Session-Pair", an item "Orig-D-IP", an item "Orig-Proto", an item "Orig-D-Port", an item "Orig-S-IP", an item "Orig-S-port", an item "Trans-D-IP", an item "Trans-Port" and an item "Timer".

The item "ID" indicates the identification information of the NAT Active list. The item "Rule-ID" indicates the identification information of the rule of the NAT conversion. The item "NAT Type" indicates the outward trip or the return journey. The item "NAT Type" indicates "DNAT (destination NAT)" in the case of the outward trip, and, indicates "SNAT(Source NAT)" in the case of the return journey. The item "Session-Pair" indicates "ID" of the NAT Active list to make a pair.

The item "Orig-D-IP" is the IP address of the origin of NAT conversion. The item "Orig-Proto" indicates the protocol of the origin of NAT conversion. The item "Orig-D-Port" indicates the port number of the destination of the origin of NAT conversion. The item "Orig-S-IP" indicates the IP address of the origin of transmission of the origin of NAT conversion. The item "Orig-S-port" indicates the port number of the origin of transmission of the origin of NAT conversion. The item "Trans-D-IP" indicates the IP address of the destination of the NAT conversion. The item "Trans-Port" indicates a port number of the NAT conversion. The item "Timer" indicates the validity period of the entry.

According to the example of FIG. 32, the virtual router "Router-1" has the NAT Active list of ID "NAT-Active-1" and ID "NAT-Active-2". The value of the item "Rule-ID" in the NAT active list of ID "NAT-Active-1" and ID "NAT-Active-2" are "NAT-Rule-1" together and indicate that it is based on the same NAT rule table. In addition, ID "NAT-Active-1" and ID "NAT-Active-2" are a pair information depicted by an item "Session-Pair". The value of item "NAT Type" of ID "NAT-Active-1" is "DNAT", and the value of item "NAT Type" of ID "NAT-Active-2" is "SNAT". Therefore, the entry of ID "NAT-Active-1" indicates the NAT conversion information of the outward trip, and the entry of ID "NAT-Active-2" indicates the NAT conversion information of the return journey.

In addition, according to the entry of ID "NAT-Active-1", about the origin of conversion of the outward trip, the value of the IP address of the destination is "133.11.0.11" (item "Orig-D-IP"), the value of the port number is "80" (item "Orig-Proto") and the protocol is "TCP" (item "Orig-D-Port"). In addition, according to the entry of ID "NAT-Active-1", about the origin of conversion of the outward trip, the value of the IP address of the origin of transmission is "130.69.100.10" (item "Orig-S-IP"), and the port number is "48754" (item "Orig-S-port").

In addition, according to the entry of ID "NAT-Active-1", about the destination of conversion of the outward trip, the value of the IP address of the destination is "172.16.10.10" (item "Trans-D-IP") and the port number is "80" (item "Trans-Port"). In addition, the validity period of the entry (item "Timer") is 30 seconds. The NAT conversion information of the return journey that an entry of ID "NAT-Active-2" indicates has information of the reverse conversion of the conversion information of the outward trip that the ID "NAT-Active-1" has.

After the process S14-13 and the process S14-19 which are explained in FIG. 30, the NAT processing (process S14-9 of FIG. 29) is finished and the process returns to the flow chart of the routing processing in FIG. 29.

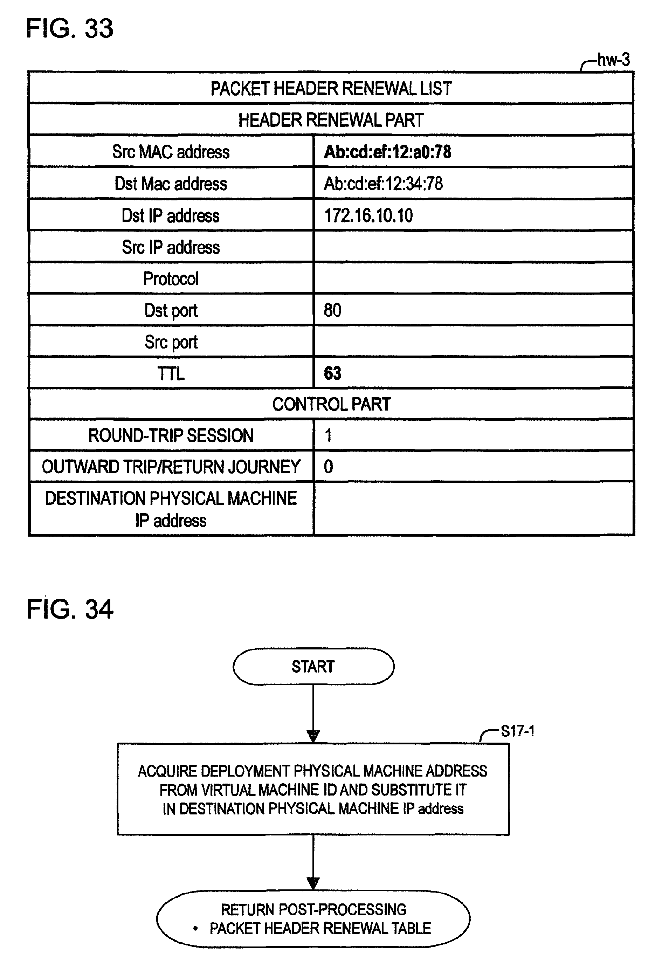

S14-10: After the process S14-8 and the process S14-9, the network management module 312 updates the packet header renewal list hw. The update processing of the packet header renewal list hw will be described according to FIG. 33.

### (Packet header renewal list (S14-10) after routing processing)

FIG. 33 is a diagram explaining update processing of the packet header renewal list hw in the process S14-10 of the flow chart in FIG. 29. In the process S14-10, the network management module 312 updates values of the item "Src Mac Address" and the item "TTL" in the packet header renewal list hw-3.

In the embodiment, the current virtual network ID is a virtual network ID "Net-2" n2 as a result of NAT conversion processing indicated by FIG. 30. According to the entry of virtual router "Router-1" vr-1 in the virtual router DB 143 (referring to FIG. 19), the MAC address of virtual network ID "Net-2" n2 is "Ab:cd:ef:12:a0:78". Therefore, the network management module 312 updates the MAC address "Ab:cd:ef:12:a0:78" in "Srct Mac Address" of the packet header renewal list hw-3. In addition, the network management module 312 decrements a value of the item "TTL" in the packet header renewal list hw-3 to value "63" from value "64".

After the processing of the process S14-10 indicated by FIG. 29, the routing processing (process S14 in FIG. 26) is finished and the process returns to the flow chart in FIG. 26.

As a result of routing processing, the network management module 312 carries out the processes S12, S13 again. When the network management module 312 detects the entry that item "Dst Mac Address" of header information hd of the user packet agrees with from an entry of the virtual router DB 143 (referring to FIG. 19) (yes of S13), the network management module 312 carries out the routing processing again (S14). The network management module 312 simulates the routing processing by one or more routers by repeating the processing of process S12 - S14.

On the other hand, when the network management module 312 does not detect the entry that a MAC address matches with the item "Dst Mac Address" in the header information hd of the user packet from an entry of the virtual router DB 143 (referring to FIG. 19) (no of S13), the network management module 312 moves to the processing of process S15.

S15: When an entry matching with is not detected (no of S13), the network management module 312 determines whether an entry that a MAC address matches with the item "Dst Mac Address" of header information hd is detected from the virtual machine DB 142 (referring to FIG. 17, FIG. 18).

In the embodiment, the value of item "Dst Mac Address" in the packet header renewal list hw-3 (referring to FIG. 33) after the NAT conversion processing indicates the MAC address "Ab:cd:ef:12:34:78" of virtual machine "Node-2" vm-2. Therefore, the network management module 312 detects an entry of virtual machine "Node-2" vm-2 which matches with the MAC address "Ab:cd:ef:12:34:78" from the virtual machine DB 142 (referring to FIG. 17, FIG. 18) (yes of S15).

S16: When an entry matching with is not detected as a result of search processing of process S15 (no of S15), it indicates that communication has not been reached. Therefore, the network management module 312 outputs error information "network unreachable" which indicates a network not arriving at and finishes as an error.

S17: On the other hand, when an entry matching with is detected (yes of S15), it indicates that the packet arrived at the virtual machine vm of the destination. Therefore, the network management module 312 performs post-processing of the simulation. The post-processing of the simulation will be described later in a flow chart of FIG. 34.

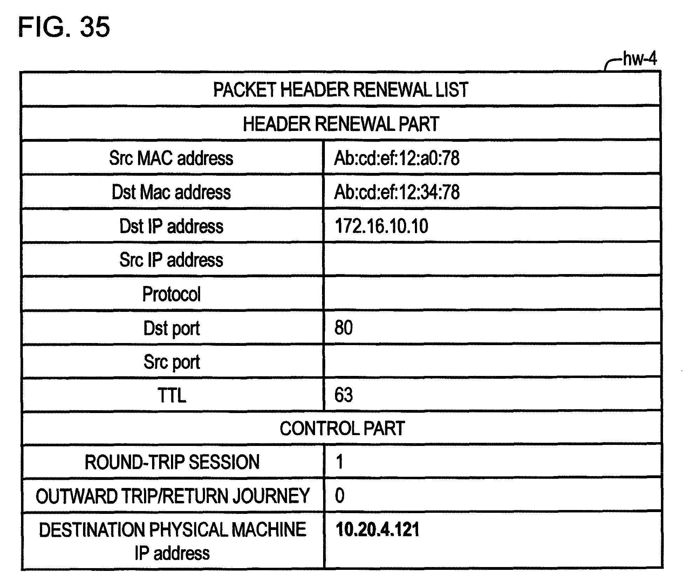

S18: The network management module 312 outputs data as a result of simulation and finishes the simulation processing. The network management module 312 sends the packet header renewal list hw described later in FIG. 35 to the virtual router vr of the inquiry origin as result data (route information) as a result of simulation.

### (Simulation processing: post-processing (S17))

FIG. 34 is a diagram of flow chart explaining processing of process S17 in the network management module 312 depicted by FIG. 26. In the process S17, the network management module 312 performs the generation processing of data as a result of simulation as post-processing of the simulation.

S17-1: The network management module 312 acquires a deployment physical machine IP address of the virtual machine vm concerned based on the virtual machine vm of the destination that the packet header renewal list hw indicates. And the network management module 312 sets the deployment physical machine IP address which is acquired in the item "address physical machine IP address" in the packet header renewal list hw.

In the embodiment, according to the packet header renewal list hw-3 (referring to FIG. 33), the virtual machine vm of the destination is virtual machine "Node-2" vm-2. Therefore, the network management module 312 acquires identification information "#20011" of the server device 10 equipped with the virtual machine "Node-2" vm-2 with reference to the virtual machine DB 142 (referring to FIG. 17, FIG. 18). And the network management module 312 acquires the IP address "10.20.4.121" of the server device "#20011" with reference to the physical machine DB 144 (referring to FIG. 16).

### (Simulation processing: a packet header renewal list after post-processing)

FIG. 35 is a diagram explaining update processing of the packet header renewal list hw-4 in the process S17-1 of the flow chart in FIG. 34. The network management module 312 sets the deployment physical machine IP address "10.20.4.121" of the virtual machine "Node-2" vm-2 which is acquired in the item "address physical machine IP address" of the packet header renewal list hw-4.

According to FIG. 26 - FIG. 35, the simulation processing of the network management module 312 was described. Then, the processing of TX processing module 402 and RX processing module 401 in the virtual router vr which is indicated in FIG. 22 will be described sequentially.

### [Processing of virtual router]

Firstly, a format of session information st of which the TX session table st-t and the RX session table st-r have and which is indicated in FIG. 22 will be described.

### (TX session table, RX session table)

FIG. 36 is a diagram explaining a format of session information st in which the TX session table st-t and the RX session table st-r have.

The session information st has match part stm, header renewal part stu, and control part stc. The match part stm is a part which is compared with the header information hd of the user packet which is transmitted and received. The header renewal part stu has a target item which is renewed the header information hd of the user packet which is transmitted and received. In addition, among the items in which the header renewal part stu has, an item of blanks is the item where it is not intended for renewal of header information hd of the user packet. The control part stc has the control information of the session.

The match part stm has the item where is the same as header information hd (referring to FIG. 23) which is an input information of the simulation processing. The header renewal part stu has the item where is the same as header renewal part hwu of the packet header renewal list hw (referring to FIG. 24) which is an output information of the simulation processing. In addition, the control part stc has an item "timer" in addition to the item of the control part hwc in the packet header renewal list hw (referring to FIG. 24). The value of the item "timer" indicates expiration date of session information st.

### (Renew header information)

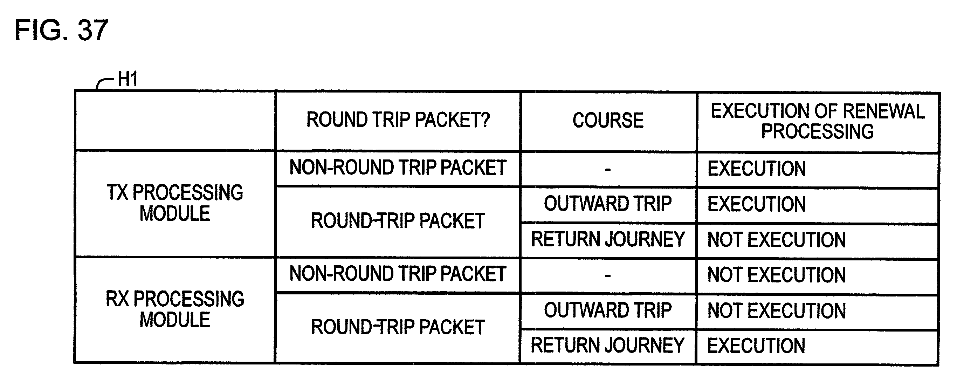

FIG. 37 is a diagram explaining the renewal processing of header information hd of the user packet in the TX processing module 402 and the RX processing module 401 depicted by FIG. 22.

The TX processing module 402 updates the header information of the user packet of tunnel packet PKa for the transmission, of which the match part stm of session information st in the TX session table st-t matches with, according to the header renewal part stu. In addition, the RX processing module 401 updates the header information of the user packet of tunnel packet PKa for the reception, of which the match part stm of session information st in the RX session table st-r matches with, according to the header renewal part stu.

The TX processing module 402 and the RX processing module 401 update the header information of the user packet depending on a value of round-trip packet fg1. The update of the header information in the table H1 of FIG. 37 correspond with flow chart of the processing of TX processing module 402 and RX processing module 401 which is represented by FIG. 38 - FIG. 46.

According to the table H1 in FIG. 37, when a packet for the transmission is a one-way packet or the outward trip packet, the TX processing module 402 updates the header information of the user packet in the tunnel packet PKa based on the session information st. In addition, the RX processing module 401 updates the header information of the user packet in the tunnel packet PKa when received the tunnel packet PKa of the return journey.

Then, according to FIG. 38 - FIG. 40, the processing of TX processing module 402 will be described.

### (TX processing module)

FIG. 38 is a diagram of flow chart explaining the processing of TX processing module 402 in the virtual router vr depicted by FIG. 22.

S21: When the TX processing module 402 receives a packet for the transmission from the virtual machine vm, the TX processing module acquires the virtual network ID in which the virtual interface of virtual machine vm connects with. That is, the TX processing module 402 acquires the virtual network ID of which the item "Connect Net" of the virtual interface of virtual machine vm in the virtual machine DB 142 (referring to FIG. 17, FIG. 18) indicates.

S22: The TX processing module 402 analyzes a packet for the transmission from the virtual machine vm and acquires the classification of the packet.

S23: The TX processing module 402, based on an analysis result, determines whether a packet for the transmission is "arp" demand.

S24: When a packet is "arp" demand (yes of S23), the TX processing module 402 notifies the proxy-ARP module 403 of the "arp" demand.

S25: On the other hand, the TX processing module 402 determines whether a packet is IP uni-cast depending on the analysis result of the packet when a packet is not "arp" demand (no of S23).

S26: When a packet is not IP uni-cast (no of S25), the TX processing module 402 performs processing of broadcasting and the transmission processing of L2 packet depending on an analysis result and finishes the processing.

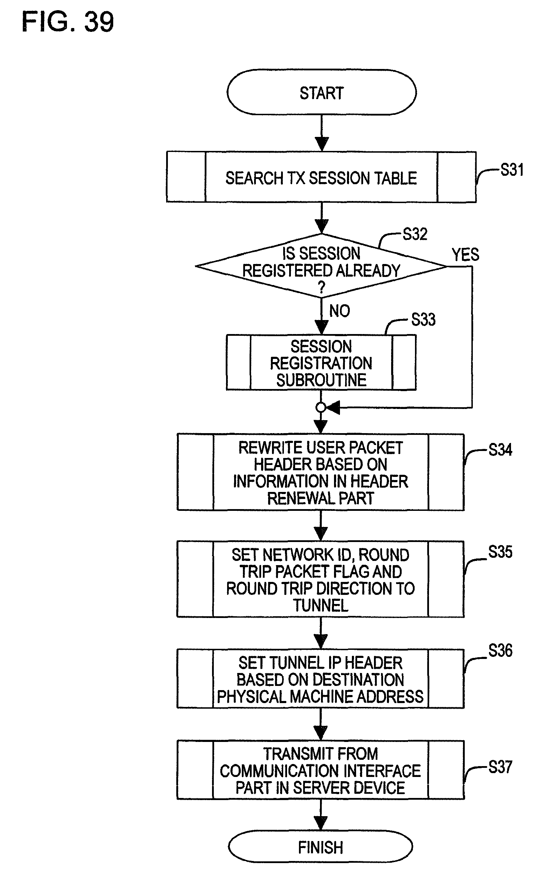

S27: On the other hand, the TX processing module 402 performs the transmission processing of packet when a packet is IP uni-cast (yes of S25). The processing of the process S27 will be described according to a flow chart of FIG. 39.

### (TX processing module: transmission processing of the IP uni-cast)

FIG. 39 is a diagram of flow chart explaining processing of the process S27 in FIG. 38. The process S27 indicates the transmission processing of packet of the IP uni-cast.

S31: The TX processing module 402 searches the TX session table st-t based on the header information hd of the packet for the transmission. That is, the TX processing module 402 searches the entry that the match part stm matches with the header information hd of the packet for the transmission from an entry of TX session table st-t.

S32: The TX processing module 402 determines whether an entry having the match part stm, which matches with the header information hd of the packet for the transmission, is registered in the TX session table st-t.

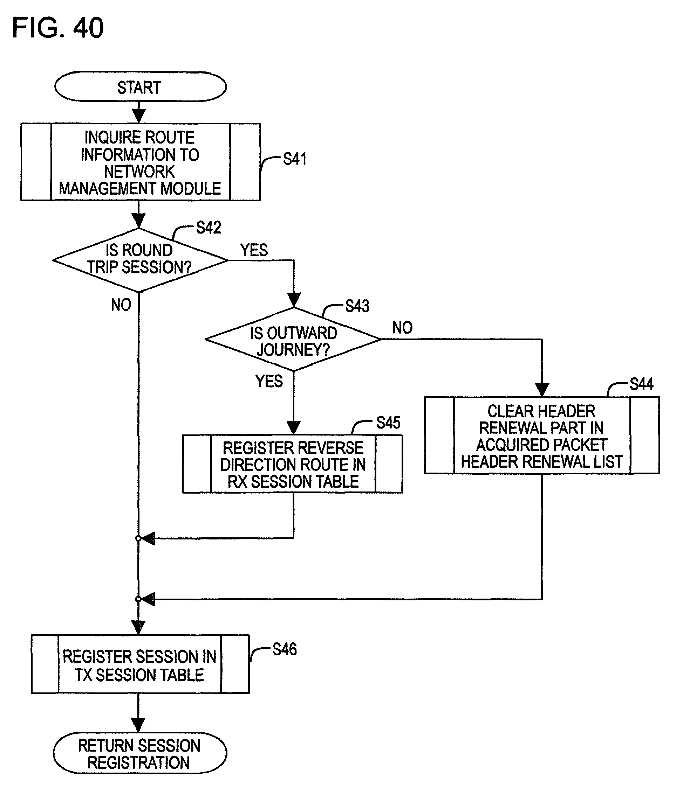

S33: When it is not registered (no of S32), the TX processing module 402 registers the session information st corresponding to header information hd of the packet for the transmission with the TX session table st-t. The details of the processing in the process S33 will be described later according to FIG. 40. In addition, in the case of already registered (yes of S32), the TX processing module 402 does not carry out the process S33 anymore.

By process S31 - S33, the TX processing module 402 acquires an entry of TX session table st-t in which the match part stm matches with the header information hd of the packet for the transmission.

S34: The TX processing module 402 updates the header information hd of the user packet included in the tunnel packet PKa based on the header renewal part stu of the entry which is acquired.

S35: The TX processing module 402 sets the virtual network ID and the round-trip flag fg1 included in the VXLAN header (FIG. 8) of tunnel packet PKa based on the entry which is acquired.

S36: The TX processing module 402 appoints a deployment physical machine IP address of the virtual machine vm of the destination in the destination IP address included in the tunneling UPD/IP header (referring to FIG. 8) of tunnel packet PKa based on the entry which is acquired.

The tunnel packet PKa arrives at the server device 10 equipped with the virtual machine vm of the destination by the processing of process S34 - S36, and the user packet included in the tunnel packet PKa arrives at the virtual machine vm of the destination. In addition, it becomes detectable whether a packet is the packet of the round-trip session or whether it is the outward trip or the return journey, based on the round-trip flag "fg1" in the tunnel packet PKa.

S37: The TX processing module 402 transmits tunnel the packet PKa which is updated through a network interface (communication interface device 203 of FIG. 21) in the server device 10.

### (TX processing module: the registration of the session)

FIG. 40 is a diagram of flow chart explaining the processing of process S33 in FIG. 39. The process S33 indicates the processing of registering the session information st corresponding to the header information hd of packet for the transmission in the TX session table st-t.

S41: The TX processing module 402 inquires the route information corresponding to the header information hd to the network management module 312 in the management server device 20, based on the header information hd of the packet for the transmission. And the TX processing module 402 receives the packet header renewal list hw from the network management module 312.

S42: The TX processing module 402 determines whether a packet for the transmission is the packet of the round-trip session based on the packet header renewal list hw which is acquired.

S43: When it is the packet of the round-trip session (yes of S42), the TX processing module 402 further determines whether a packet for the transmission is the packet of the outward trip.

S44: When it is the packet of the round-trip session (yes of S42) and is the packet of the return journey (no of S43), the TX processing module 402 clears information of the header renewal part hwu in the packet header renewal list hw which is acquired. In other words, The TX processing module 402 makes the information of header renewal part hwu invalid.

S45: In addition, the TX processing module 402 registers the reverse route of the route which is indicated by the packet header renewal list hw which is acquired with the RX session table st-r, when it is the packet of the outward trip (yes of S43). In other words, The TX processing module 402 generates the route of the return journey based on the packet header renewal list hw which is acquired and registers it in the RX session table st-r. In this way, it is possible that the RX processing module 401 updates the header information of the user packet at the time of the reception of the packet of the return journey, based on RX session table st-r. Therefore, It is possible to make the route of the outward trip and the route of the return journey agree.

In addition, the TX processing module 402 uses the information of the header renewal part hwu for renewal (S34 in FIG. 39) of tunnel packet Pka, when it is a one-way packet (no of S42) or when it is the packet of the outward trip (yes of S43) (referring to FIG. 37).

S46: The TX processing module 402 adds the packet header renewal list hw to the TX session table st-t and registers it, after the process S42 - S45. The TX processing module 402 sets the expiration date to the item "timer" of the entry in the TX session table st-t which is added then.

In this way, the TX processing module 402 inquires to the IaaS control program 310 for the route information, when the TX session table st-t does not have the session information st corresponding to header information hd of the packet for the transmission. And the TX processing module 402 updates the tunnel packet PKa for the transmission based on route information. In this way, it is possible that the routing control of the virtual router vr which followed the migration realizes.

Then, according to FIG. 41 - FIG. 46, the processing of the RX processing module 401 will be described.

### (RX processing module)

FIG. 41 is a diagram of flow chart explaining the processing of RX processing module 401 in the virtual router vr depicted by FIG. 22.

S51: The RX processing module 401 analyzes the header information hd in the packet which is received from the tenant network nw1 and acquires the classification of the packet.

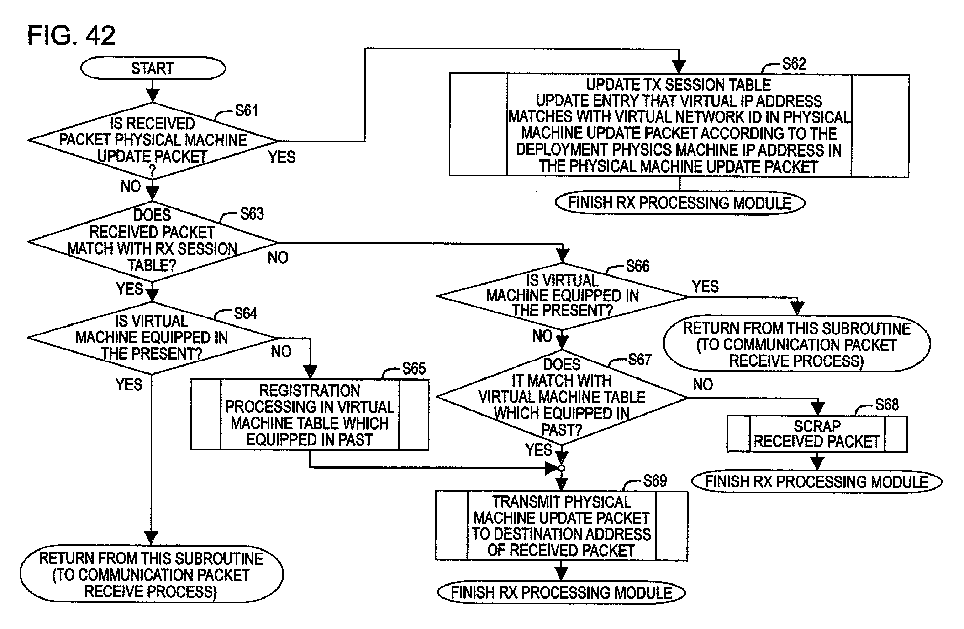

S52: The RX processing module 401 carries out the processing of the physical machine update packet PKb. The details of the processing of process S52 will be described later according to a flow chart in FIG. 42.

S53: The RX processing module 401 analyzes the reception packet, and determines whether a packet is IP uni-cast.

S54: When the reception packet is not the IP uni-cast (no of S53), the RX processing module 401 performs the processing of broadcasting and the transmission processing of L2 packet depending on the analysis result and finishes processing.

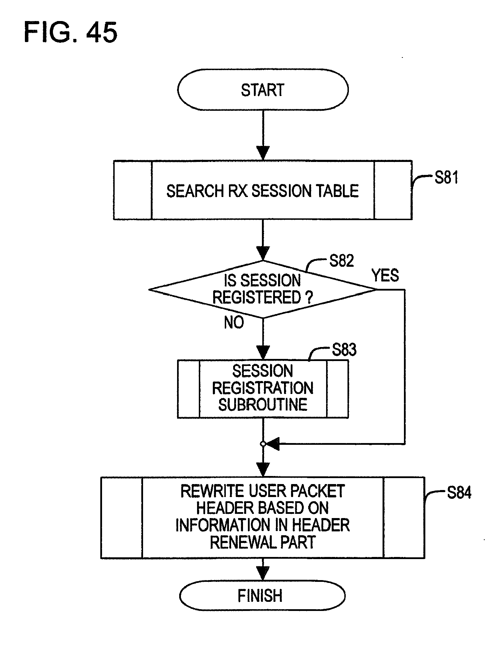

S55: On the other hand, the RX processing module 401 carries out the reception processing of the packet, when a reception packet is IP uni-cast (yes of S53). The processing of process S55 will be described later according to a flow chart in FIG. 45.

S56: The RX processing module 401 transfers a packet to the virtual machine vm equipped with the own machine corresponding to the virtual network ID of the packet and the MAC address of the destination of the packet.

### (RX processing module: processing of the physical machine update packet)

FIG. 42 is a diagram of flow chart explaining processing of the process S52 in FIG. 41. The process S52 indicates the reception processing and the transmission processing of the physical machine update packet PKb.

S61: The RX processing module 401 determines whether a reception packet is the physical machine update packet PKb based on the flag fg2 (referring to FIG. 9) in the reception packet.

S62: When it is the physical machine update packet PKb (yes of S61), the RX processing module 401 updates the TX session table st-t and finishes the processing.

The TX session table st-t is managed for every virtual network ID. Therefore, the RX processing module 401 detects an entry, in which the virtual network ID and the virtual IP address included in the physical machine update packet PKb matches, from all entries of TX session table st-t. The RX processing module 401 updates the deployment physical machine IP address in the matched entry by the deployment physics machine IP address in the physical machine update packet PKb.

In this way, the RX processing module 401 updates the TX session table st-t in the virtual router vr according to the deployment physical machine IP address included in the physical machine update packet PKb. In other words, the RX processing module 401 updates the deployment physics machine IP address of virtual machine vm which moved by the migration in the TX session table st-t. Thereby, it is possible that the TX processing module 402 communicates with the virtual machine vm which moved by the migration based on TX session table st-t.

S63: On the other hand, when it is not the physical machine update packet PKb (no of S61), the RX processing module 401 determines whether there is the entry that the match part stm matches with the header information hd of the packet in the RX session table st-r.

S64: When there is an entry matching with (yes of S63), the RX processing module 401 determines whether the virtual machine vm of the destination of the packet is equipped with by an own machine. The RX processing module 401 judges whether the virtual machine vm is equipped by referring to the hypervisor Hy (referring to FIG. 1).

In addition, it indicates that the virtual machine vm of the destination of the packet works when the virtual machine vm of the destination of the packet is equipped with by an own machine (yes of S64). Therefore, the RX processing module 401 moves to the judgment processing in the process S53 (referring to the flow chart in FIG. 41).

S65: When there is a matching entry (yes of S63), and the virtual machine vm of the destination of the packet is not equipped with by an own machine (no of S64), it indicates that the virtual machine vm, which worked with an own machine, moved by the migration. In this way, it is possible to determine whether the virtual machine vm was equipped with past, by judging whether there is an entry in the RX session table st-r which matches with the header information hd.

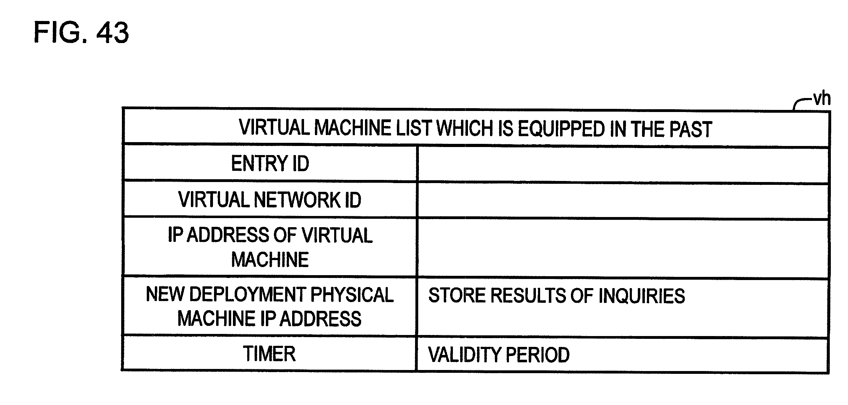

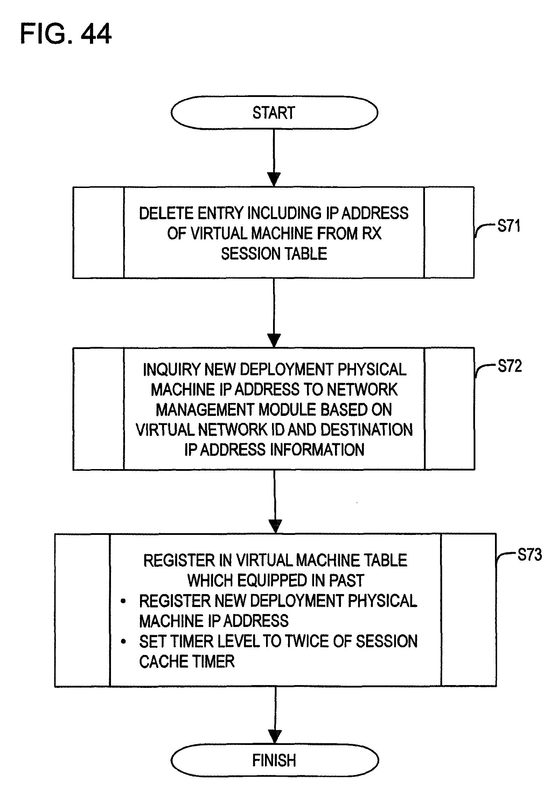

And the RX processing module 401 inquires to the IaaS control program 310 for a deployment physical machine IP address after migration of the virtual machine vm which worked with an own machine. And the RX processing module 401 updates the virtual machine list vh which equipped in the past according to the deployment physical machine IP address after migration which is acquired. The virtual machine list vh which equipped in the past will be described according to FIG. 43. In addition, the details of the processing of process S65 will be described later according to a flow chart of FIG. 44.

### (Virtual machine list which is carried in the past)

FIG. 43 is a diagram explaining an example of virtual machine list vh which equipped in the past. The virtual machine list vh which equipped in the past has an item "entry ID", an item "virtual network ID", an item "IP address of virtual machine vm", an item "new deployment physical machine IP address" and an item "timer".

The item "entry ID" indicates the identification information. The item "virtual network ID" indicates the virtual network ID in which the virtual machine vm belongs to. The item "an IP address of virtual machine vm" indicates the IP address of virtual machine vm. The item "new deployment physical machine IP address" indicates an IP address of the server device 10 equipped with the virtual machine vm after the migration. The item "timer" indicates a period to hold an entry.

### (RX processing module: update processing of virtual machine list which was equipped with the past)

FIG. 44 is a diagram of flow chart explaining the processing of process S65 in FIG. 42. The process S65 indicates update processing of the virtual machine list vh which equipped in the past (FIG. 43).

S71: The RX processing module 401 deletes the entry that the MAC address of the destination in the match part stm matches with an IP address of the virtual machine vm of the destination of the packet from the RX session table st-r. In other words, the RX processing module 401 deletes the entry of which the virtual machine vm which moved by migration is a destination from the RX session table st-r.

S72: The RX processing module 401 inquires to the network management module 312 in the management server device 20 for the deployment physical machine IP address of the virtual machine vm which migrated based on the virtual network ID and the header information hd of packet.

Especially, the RX processing module 401 generates the header information hd of the reverse route based on the header information hd of the packet. And the RX processing module 401 inquires to the network management module 312 in the management server device 20 for route information based on header information hd of the reverse route and the virtual network ID. And the RX processing module 401 receives the packet header renewal list hw from the network management module 312.

S73: The RX processing module 401 registers an entry with the virtual machine list vh which equipped in the past based on the packet header renewal list hw which is received.

Especially, the RX processing module 401 registers the virtual network ID of the virtual machine vm which migrated with the item "virtual network ID" of the virtual machine list vh which equipped in the past. In addition, the RX processing module 401 registers an IP address of virtual machine vm with an item "an IP address of virtual machine vm" in the virtual machine list vh which equipped in the past.

In addition, the RX processing module 401 registers a value of item "destination physical machine IP address" in the control part hwc in the packet header renewal list hw which is acquired with an item "new deployment physical machine IP address" in the virtual machine list vh which equipped in the past. In addition, the RX processing module 401 sets a timer level of virtual machine list vh which equipped in the past in a value of 2 times as large as a cache timer.

The process returns to the processing of RX processing module 401 in FIG. 42.

S66: When there is not the entry that the match part stm matches with the header information hd of the packet in the RX session table st-r (no of S63), the RX processing module 401 determines whether the virtual machine vm of the destination of the packet is equipped with by an own machine. When the virtual machine vm is equipped (yes of S66), it corresponds a case of detecting a new session. Therefore, the RX processing module 401 moves to the judgment processing of process S53 of the flow chart in FIG. 41.

S67: When there is not an entry matching with (no of S63), and the virtual machine vm of the destination of the packet is not equipped with by an own machine (no of S66), the RX processing module 401 refers to the virtual machine list vh which equipped in the past. And the RX processing module 401 determines whether there is an entry matching with the virtual machine vm of the destination of the packet in the virtual machine list vh which equipped in the past. In other words, the RX processing module 401 judges whether the reception packet is a packet which is a destination of the virtual machine vm which equipped in the past.

S68: When there is not an entry which matches with the virtual machine vm of the destination of the packet which is received (no of S67), it indicates that it is an inappropriate packet. Therefore, the RX processing module 401 deletes the packet which is received and finishes processing.

S69: In the case of yes in the process S65 and the process S67, it indicates that the reception packet is a packet to which the virtual machine vm which equipped in the past is a destination. Therefore, the RX processing module 401 sends the physical machine update packet PKb including the new deployment physical machine IP address of the virtual machine vm of the destination of the reception packet in the IP address of the origin of transmission of the reception packet.

In this way, the RX processing module 401 working with the server device 10 which equipped with the virtual machine vm in the past sends the physical machine update packet PKb when the packet to the virtual machine vm concerned receives. Thereby, it is possible that the RX processing module 401 notifies the deployment physical machine IP address of virtual machine vm which equipped in an own machine in the past to the virtual machine vm of the origin of transmission of the packet. Therefore, it is possible to reduce the interruption time for communication by the outbreak of migration.

### (RX processing module: the packet receives and processes)

FIG. 45 is a diagram of flow chart explaining the processing of process S55 in the flow chart of FIG. 41. The process S55 indicates the receiving processing of the packet.

S81: The RX processing module 401 searches the RX session table st-r based on the header information hd of the reception packet. Specially, the RX processing module 401 searches an entry that the match part stm matches with the header information hd of the packet from an entry of the RX session table st-r.

S82: The RX processing module 401 determines whether an entry that the match part stm matches with the header information hd of the reception packet is registered in the RX session table st-r.

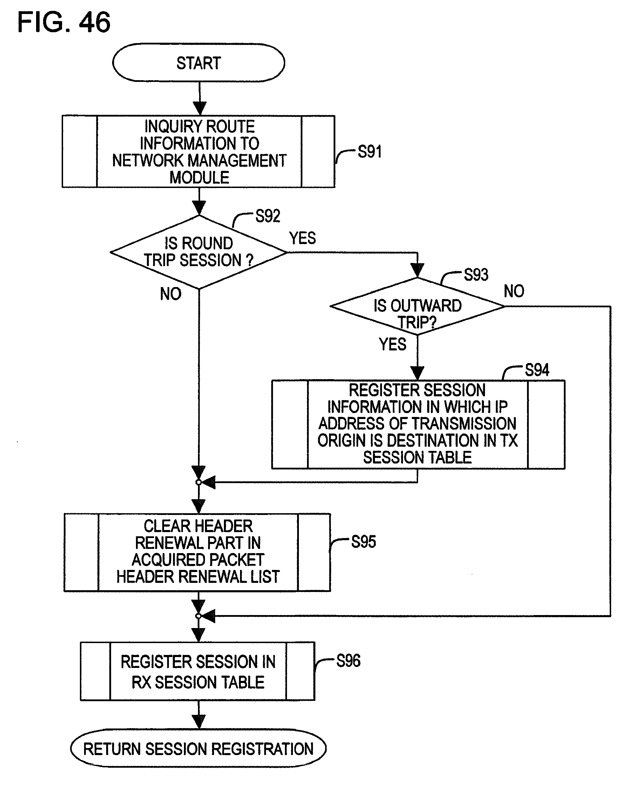

S83: When it is not registered (no of S82), the RX processing module 401 registers the session information st corresponding to the header information hd of the reception packet with the RX session table st-r. The details of the processing of process S83 will be described later according to FIG. 46. In addition, in the case of already registered (yes of S82), the RX processing module 401 does not carry out the process S83 anymore.

By the process S81 - S83, the RX processing module 401 acquires an entry of RX session table st-r where the match part stm matches with the header information hd of the reception packet.

S84: The RX processing module 401 updates the header information hd of the user packet included in the tunnel packet PKa based on the entry which is acquired. And the RX processing module 401 transfers a user packet to the virtual machine vm of the destination.

In addition, in the case of the return journey packet, the RX processing module 401 updates the header information hd of the user packet, based on RX session table st-r (referring to S45 in FIG. 40) where the TX processing module 402 registered in the case of the outward trip (S84). In this way, it is possible to match the route of the outward trip with the route of the return journey of the packet through the IP conversion by NAT or the load balancer.

### (RX processing module: registration of the session)

FIG. 46 is a diagram of flow chart explaining processing of the process S83 of FIG. 45. The process S83 indicates the processing of registering the session information st corresponding to the header information hd of the reception packet in the RX session table st-r.

S91: The RX processing module 401 inquires to the network management module 312 in the management server device 20 for route information corresponding to the header information hd based on the header information hd of the reception packet. And the RX processing module 401 receives the packet header renewal list hw from the network management module 312.

S92: The RX processing module 401 determines whether a reception packet is the packet of the round-trip session based on the packet header renewal list hw which is acquired.

S93: When it is the packet of the round-trip session (yes of S92), the RX processing module 401 further determines whether a reception packet is the packet of the outward trip.

S94: When it is the packet of the outward trip (yes of S93), the RX processing module 401 generates the session information st of which the virtual machine vm of the origin of transmission of the reception packet and an IP address are a destination and registers it with the TX session table st-t. The TX processing module 402 is able to acquire the IP address of the destination of tunnel packet PKa at the time of the transmission of the packet of the return journey based on session information st which is registered. Thereby, it is possible to match the route of the outward trip and the route of the return journey of the packet through the IP conversion by NAT or the load balancer.

S95: When it is a one-way packet (no of S92) or when it is the packet of the outward trip (yes of S93), the RX processing module 401 clears information of header renewal part hwu in the packet header renewal list hw which is acquired. In other words, the RX processing module 401 disables the header renewal part hwu of the packet header renewal list hw which is acquired.

In addition, the RX processing module 401 uses information of header renewal part hwu for renewal of tunnel packet Pka (S84 of FIG. 45), when it is the packet of the round-trip session (yes of S92) and is the packet of the return journey (no of S93) (referring to FIG. 37).

S96: After the process S92 - S95, the RX processing module 401 adds the packet header renewal list hw to the RX session table st-r and registers it. The RX processing module 401 sets expiration date to the item "timer" of the entry in the RX session table st-r which is added then.

In this way, the RX processing module 401 inquires to the IaaS control program 310 for route information, when there is not the session information st corresponding to header information hd of the packet which is received in the RX session table st-r held for cache. And, the RX processing module 401 updates the header information hd of the packet which is received based on the route information and transfers it to the virtual machine vm. Thereby, it is possible that the routing control of virtual router vr which followed the migration realizes.

### [Other embodiment]

In addition, in the embodiment described above, the virtual router vr adds the round-trip flag fg1 to the tunnel packet PKa. But, it is not limited in the embodiment and the virtual router vr does not need to add the round-trip flag fg1 to the tunnel packet PKa.

The virtual router vr may acquire the route information of the return journey by inquiring to the IaaS control program 310 at the time of the transmission of the packet of the return journey. In this way, it is possible to make the route of the outward trip and the route of the return journey of the packet agree even if the round-trip flag fg1 is not added to the tunnel packet PKa.

In addition, in the embodiment described above, the virtual router vr of which the virtual machine vm appoints as a default route works in the server device 10 equipped with the virtual machine vm. But it is not limited to this embodiment. The virtual router vr of which the virtual machine vm appoints as a default route may works in the server device 10 which is different from the server device 10 equipped with the virtual machine vm.

## Claims

1. A computer readable storage medium storing therein a program for causing a computer to execute a process, the process comprising:
receiving an inquiry of route information of a communication packet from a first virtual machine to a second virtual machine from a first virtual router relaying the communication packet from the first virtual machine;
generating the route information including network identification information of a physical machine equipped with the second virtual machine based on identification information of the second virtual machine and constitution information including network identification information of the physical machine equipped with the second virtual machine; and
transmitting the route information to the first virtual router.

2. The storage medium according to claim 1, wherein generating further comprising:
carrying out routing processing of the communication packet including a selection of the route of the communication packet and conversion of an IP address based on first information about the communication of the communication packet and the constitution information including network identification information of each component of virtual system including the first virtual machine, the second virtual machine and the first virtual router, and conversion information of the IP address.

3. The storage medium according to claim 2, wherein the generation further comprising:
generating the route information including a round trip information for generating the route information of return journey of the packet when the first virtual machine determines that the packet is a packet of the outward trip of the round-trip communication.

4. The storage medium according to claim 2 or 3, wherein the generation further comprising:
generating the route information including second information about the communication packet which arrives at the second virtual machine through a second virtual router corresponding to the second virtual machine from the first virtual machine.

5. The storage medium according to any one of claims 2 to 4, wherein the transmission further comprising:
transmitting the route information, which updates the network identification information of the physical machine equipped with the second virtual machine in the packet, to the first virtual router.

6. The storage medium according to any one of claims 2 to 5, wherein the transmission further comprising:
transmitting the route information for which the first virtual router sends to a third virtual router which generates a packet of the communication to the second virtual machine to the first virtual router.

7. The storage medium according to any one of claims 1 to 6, wherein the generation comprising:
carrying out the routing processing based on a MAC address and an IP address which indicates the network identification information of each component in the virtual system included in the constitution information.

8. The storage medium according to any one of claims 1 to 7, wherein the transmission comprising:
sending the route information of which the first virtual router memorizes during a scheduled period to the first virtual router.

9. A route information provision method comprising:
receiving, by a processor, an inquiry of route information of a communication packet from a first virtual machine to a second virtual machine from a first virtual router relaying the communication packet from the first virtual machine;
generating, by the processor, the route information including network identification information of a physical machine equipped with the second virtual machine based on identification information of the second virtual machine and constitution information including network identification information of the physical machine equipped with the second virtual machine; and
transmitting, by the processor, the route information to the first virtual router.

10. Information processing system comprising:
a first virtual machine which is constructed by a first hardware;
a second virtual machine which is constructed by a second hardware;
a first virtual router which is constructed by the first hardware or a third hardware and relays a packet from the first virtual machine; and
a route information provision device, and
wherein the first router comprises:
a communication device configured to send an inquiry of route information of a communication packet from the first virtual machine to a second virtual machine to the route information provision device; and
a processing device configured to update the communication packet from the first virtual machine to the second virtual machine based on the route information, and
wherein the route information provision device comprises:
a storage device configured to store identification information of the second virtual machine and constitution information including network identification information of the physical machine equipped with the second virtual machine; and
a processing device configured to generate the route information including network identification information of a physical machine equipped with the second virtual machine based on the constitution information and transmits the route information to the first virtual router.
